# EUROPEAN PATENT SPECIFICATION

(11) **EP 4 011 156 B1**
(45) Date of publication and mention of the grant of the patent: **17.12.2025**
(21) Application number: 20757420.3
(22) Date of filing: 05.08.2020
(51) Int. Cl.: H04W 76/14, H04W 36/08, H04W 72/23, H04W 36/00

(54) **SIDELINK CONFIGURATION**
SIDELINK-KONFIGURATION
CONFIGURATION DE LIAISON LATÉRALE

(30) Priority: 05.08.2019 WO PCT/CN2019/099303
(43) Date of publication of application: 15.06.2022
(73) Proprietor: TELEFONAKTIEBOLAGET LM ERICSSON (PUBL), 164 83 Stockholm (SE)
(72) Inventor: ZHANG, Congchi, 201204 Shanghai (CN); ORSINO, Antonino, 02480 Kirkkonummi (FI); YAZID LYAZIDI, Mohammed, 165 52 Hässelby (SE); ZHANG, Zhang, Beijing 100102 (CN)
(74) Representative: Ericsson
(86) International application number: PCT/SE2020/050765
(87) International publication number: WO 2021/025609

(56) References cited:
- US-A1- 2018 115 930
- US-A1- 2019 053 251
- HUAWEI ET AL: "Sidelink resource configuration during handover", vol. RAN WG2, no. Dubrovnik, Croatia; 20160411 - 20160415, 2 April 2016 (2016-04-02), XP051082363, Retrieved from the Internet <URL:http://www.3gpp.org/ftp/tsg_ran/WG2_RL2/TSGR2_93bis/Docs/> [retrieved on 20160402]

## Description

### TECHNICAL FIELD

The present application relates generally to a wireless communication system and relates more particularly to sidelink configuration in such a system.

### BACKGROUND

A sidelink is a link between wireless devices that enables device-to-device (D2D) discovery and/or communication. When a wireless device in network coverage, the network may configure the sidelink for the wireless device, e.g., in terms of quality of service (QoS) parameters associated with each sidelink QoS flow, sidelink radio bearer configuration, sidelink QoS flow to sidelink radio bearer mapping, and the like. Network control of sidelink configuration, however, proves problematic when the wireless device hands over between radio network nodes in the network. Indeed, if the wireless device's current sidelink configuration is invalid for the target radio network node, the wireless device's sidelink connectivity may be interrupted due to the handover.

The 3GPP contribution R2-162290 by Huawei et al: "Sidelink resource configuration during handover" discuss vehicle-to-everything (V2X) operation during handover and cell reselection. US 2018/115930 discusses cellular handovers involving sidelink communications.

### SUMMARY

The invention is defined by the subject-matter of the independent claims. Preferred embodiments are set out in the dependent claims.

Some embodiments herein handle sidelink configuration when a wireless device hands over between radio network nodes, e.g., in such a way that avoids or mitigates interruption to the device's sidelink connectivity. In some embodiments, for example, the source and target radio network nodes coordinate between themselves regarding which sidelink configuration the wireless device is to use during and/or after the handover. Based on such coordination, the source radio network node may configure the sidelink for the wireless device, e.g., according to a sidelink configuration received from and/or agreed with the target radio network node. Or, if the target radio network node lacks support for configuring the sidelink, the source radio network node may indicate that lack of support to the wireless device and/or the wireless device may revert to a stored or default sidelink configuration, e.g., for use in out-of-coverage conditions.

More particularly, embodiments herein include a method performed by a wireless device. The method includes receiving, from a source radio network node of a handover, a handover command message indicating a sidelink configuration that is usable after the handover and is supported by a target radio network node of the handover. The sidelink configuration is a configuration of a sidelink for the wireless device and configures one or both of a mapping of sidelink Quality of Service (QoS) flows to sidelink radio bearers, and a configuration of one or more sidelink radio bearers.

In some embodiments, the method further comprises configuring the sidelink according to the sidelink configuration. Alternatively or additionally, the method may further comprise transmitting or receiving over the sidelink as configured according to the sidelink configuration.

In some embodiments, the sidelink configuration further configures at least one of QoS parameters associated with each sidelink QoS flow; a configured grant usable by the wireless device on the sidelink; or a resource pool that includes resources for transmission or reception over the sidelink.

In some embodiments, the sidelink configuration further comprises a configured grant usable by the wireless device over the sidelink.

Embodiments also include a method performed by a radio network node that is a source radio network node of a handover of a wireless device. In some embodiments, the method includes transmitting, from the source radio network node to a target radio network node of the handover, a handover command message indicating a sidelink configuration that is usable after the handover and is supported by a target radio network node of the handover. The sidelink configuration is a configuration of a sidelink for the wireless device and configures one or both of a mapping of sidelink QoS flows to sidelink radio bearers, and a configuration of one or more sidelink radio bearers.

In some embodiments, the sidelink configuration further configures at least one of: QoS parameters associated with each sidelink QoS flow; a configured grant usable by the wireless device on the sidelink; or a resource pool that includes resources for transmission or reception over the sidelink.

In some embodiments, the sidelink configuration further comprises a configured grant usable by the wireless device over the sidelink.

Embodiments herein also include corresponding apparatuses, computer programs, and carriers. For example, embodiments herein include a wireless device, e.g., comprising communication circuitry and processing circuitry. The wireless device is configured to perform any of the wireless device methods described above.

Embodiments herein further include a radio network node, e.g., comprising communication circuitry and processing circuitry. The radio network node is configured to operate as a source radio network node of a handover of a wireless device. The radio network node is configured to perform any of the radio network node methods described above.

### BRIEF DESCRIPTION OF THE DRAWINGS

Figure 1 is a block diagram of a wireless communication network according to some embodiments.
Figure 2 is a block diagram of a wireless communication network according to other embodiments.
Figure 3 is a logic flow diagram of a method performed by a wireless device according to some embodiments.
Figure 4 is a logic flow diagram of a method performed by a wireless device according to other embodiments.
Figure 5 is a logic flow diagram of a method performed by a source radio network node according to some embodiments.
Figure 6 is a logic flow diagram of a method performed by a target radio network node according to some embodiments.
Figure 7 is a block diagram of a wireless device according to some embodiments.
Figure 8 is a block diagram of a network node, such as a radio network node, according to some embodiments.
Figure 9 is a block diagram of a Cellular Intelligent Transport System according to some embodiments.
Figure 10 is a block diagram of sidelink radio bearer configuration according to some embodiments.
Figure 11 is a call flow diagram of a handover procedure according to some embodiments.
Figure 12 is a call flow diagram of a handover procedure that includes coordination of sidelink configuration according to some embodiments.
Figure 13 is a block diagram of a wireless communication network according to some embodiments.
Figure 14 is a block diagram of a user equipment according to some embodiments.
Figure 15 is a block diagram of a virtualization environment according to some embodiments.
Figure 16 is a block diagram of a communication network with a host computer according to some embodiments.
Figure 17 is a block diagram of a host computer according to some embodiments.
Figure 18 is a flowchart illustrating a method implemented in a communication system, in accordance with one embodiment.
Figure 19 is a flowchart illustrating a method implemented in a communication system, in accordance with one embodiment.
Figure 20 is a flowchart illustrating a method implemented in a communication system, in accordance with one embodiment.
Figure 21 is a flowchart illustrating a method implemented in a communication system, in accordance with one embodiment.

### DETAILED DESCRIPTION

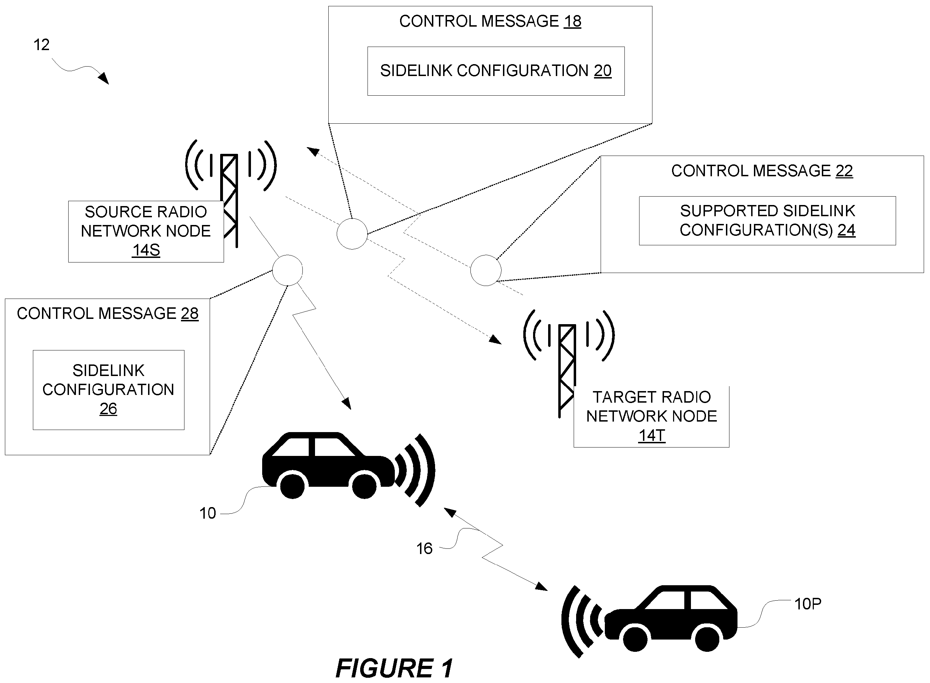

Figure 1 shows a wireless device 10 configured to be served by a wireless communication network 12 according to some embodiments. Although shown in the form of a vehicle, the wireless device 10 may be any type of device configured for wireless communication. Regardless, the wireless device 10 as shown is served by a radio network node 14S, e.g., in the sense that the wireless device 10 camps on a cell provided by the radio network node 14S. The wireless device 10 may be in a Radio Resource Control (RRC) Connected state with an established RRC connection with the radio network node 14S.

In some embodiments, the radio network node 14S helps configure the wireless device 10 to be able to directly communicate with a peer wireless device 10P over a sidelink 16, e.g., via D2D discovery and/or communication. The radio network node 14S may for example configure the sidelink 16 for the wireless device 10, e.g., in terms of quality of service (QoS) parameters associated with each sidelink QoS flow, sidelink radio bearer configuration, sidelink QoS flow to sidelink radio bearer mapping, and the like.

Due to changing channel conditions, physical movement of the wireless device 10, or other reasons, though, the radio network node 14S may trigger handover of the wireless device 10 to another radio network node 14T. In this case, the radio network node 14S operates as the source radio network node of the handover and the other radio network node 14T operates as a target radio network node of the handover.

Some embodiments herein account for the impact that this handover could have on the wireless device's sidelink configuration and thereby connectivity. In particular, some embodiments herein handle sidelink configuration when the wireless device 10 hands over between radio network nodes 14S, 14T, e.g., in such a way that avoids or mitigates interruption to the device's sidelink connectivity.

For example, in some embodiments, the source radio network node 14S effectively coordinates with the target radio network node 14T regarding which sidelink configuration the wireless device 10 is to use during and/or after the handover. This way, the configuration of the sidelink 16 may be adapted, if needed, to ensure sidelink connectivity remains intact during and/or after the handover. For example, in advance of the handover, the sidelink 16 may be configured according to a sidelink configuration received from and/or agreed with the target radio network node 14T.

Figure 1 for instance shows that the source radio network node 14S in some embodiments transmits a control message 18 to the target radio network node 14T. The control message 18 may for instance be a HandoverPreparationlnformation message that transfers RRC information used by the target radio network node 14T during handover preparation. This HandoverPreparationlnformation message may be contained for instance within a handover request that requests the target radio network node 14T to prepare resources for the handover (as shown in the example changes to TS 38.423 below). In other embodiments the control message 18 may be an X2/Xn message, or some other type of inter-node RRC message such as CG-Config or CG-Configlnfo. Regardless of the particular type of the control message 18, the control message 18 indicates a configuration 20 of the sidelink 16 for the wireless device 10. This configuration 20 may be referred to as a sidelink configuration as shown in Figure 1. In one or more embodiments, the indicated sidelink configuration 20 is the current sidelink configuration used by the wireless device 10 for the sidelink 16 as of when the control message 18 is sent. In these and other embodiments, then, the sidelink configuration 20 may configure at least one of any one or more of: quality of service (QoS) parameters associated with each sidelink QoS flow; a mapping of sidelink QoS flows to sidelink radio bearers; configuration of one or more sidelink radio bearers; a configured grant usable by the wireless device on the sidelink 16; a resource pool that includes resources for transmission or reception over the sidelink 16; one or more services running at the wireless device 10; one or more frequencies for the sidelink 16; and one or more source identifiers and/or one or more destination identifiers for the sidelink 16. Regardless, the sidelink configuration 20 indicated to the target radio network node 14T effectively informs the target radio network node 14T about what sidelink configuration the wireless device 10 might need or desire, e.g., in order to maintain sidelink connectivity during and/or after the handover. The target radio network node 14T may thereby take the indicated sidelink configuration 20 into account in its handover preparation.

Alternatively or additionally to the source radio network node 14S indicating the sidelink configuration 20 of the wireless device 10 in the control message 18, the target radio network node 14T as shown may transmit a control message 22 to the source radio network node 14S. The control message 22 may for example be a handover request acknowledgement message. Regardless of its particular type, the control message 22 as shown indicates one or more sidelink configurations 24 that the target radio network node 14T supports. The sidelink configuration(s) 24 indicated as supported may for instance be referred to as admitted or accepted sidelink configuration(s). Alternatively or additionally, the control message 22 may indicate a configured grant or a resource pool usable by the wireless device 10 on the sidelink 16 during the handover.

The control message 18 transmitted from the source radio network node 14S to the target radio network node 14T and/or the control message 22 transmitted from the target radio network node 14T to the source radio network node 14S effectively enables the radio network nodes 14S, 14T to coordinate which sidelink configuration the wireless device 10 is to use during and/or after the handover. Accordingly, as shown in Figure 1, the source radio network node 14S may thereafter transmit to the wireless device 10 a control message 28 (e.g., a reconfiguration message) indicating a sidelink configuration 26 that: (i) is usable during and/or after the handover; and/or (ii) is supported by the target radio network node 14T. In some embodiments, this sidelink configuration 26 configures at least one of any one or more of: (i) quality of service (QoS) parameters associated with each sidelink QoS flow; (ii) a mapping of sidelink QoS flows to sidelink radio bearers; (iii) configuration of one or more sidelink radio bearers (iv) a configured grant usable by the wireless device 10 on the sidelink 16; and (v) a resource pool that includes resources for transmission or reception over the sidelink 16. Regardless, the wireless device 10 may correspondingly configure the sidelink 16 according to the indicated sidelink configuration 26, e.g., prior to the handover. This way, the wireless device 10 can use the indicated sidelink configuration 26 during and/or after the handover. With the sidelink configuration 26 having been effectively coordinated between the source and target radio network nodes 14S, 14T, the wireless device 10 is more likely to maintain sidelink connectivity during and/or after the handover than if no such coordination had occurred.

In some embodiments, the source radio network node 14S chooses the sidelink configuration 26 that the wireless device 10 is to use during and/or after the handover. For example, the source radio network node 14 may choose that sidelink configuration 26 as being one of the sidelink configuration(s) 24 that the target radio network node 14T indicates it supports. In other embodiments, the target radio network node 14T chooses the sidelink configuration 26 that the wireless device 10 is to use during and/or after the handover. For example, the target radio network node 14T may choose that sidelink configuration 26 based on the wireless device's (current) sidelink configuration 20 indicated by the source radio network node 14S and/or based on the sidelink configuration(s) 24 supported by the target radio network node 14T. Regardless, where the target radio network node 14T chooses the sidelink configuration 26, the source radio network node 14S may relay that sidelink configuration 26 to the wireless device in the control message 28. For example, the control message 28 may be, or may include, a message received from the target radio network node 14T indicating the sidelink configuration 26 that the wireless device 10 is to use during and/or after the handover. In this way, the source radio network node 14S may indicate to the wireless device 10 the sidelink configuration 26 that it received from the target radio network node 14T.

Note that, although only one target radio network node of the handover is shown in Figure 1, the target radio network node 14T may be just one candidate among multiple candidate target radio network nodes of the handover. In this case, the source radio network node 14S may select one of the candidate target radio network nodes towards which to perform the handover, based on which sidelink configurations are supported by those candidate target network nodes. That is, the sidelink configuration(s) supported by a candidate target network node serve in this embodiment as criteria based on which a radio network node is selected as the target of a handover. For example, in some embodiments, the source radio network node 14S may transmit the control message 18 to each of the candidate target radio network nodes for the handover. The source radio network node 14S may then receive, from each candidate target radio network node, a control message (like control message 22) that indicates one or more sidelink configurations that the candidate target radio network node supports. The source radio network node 14S may then select, from among the candidate target radio network nodes and based on the control messages received from the respective candidate target radio network nodes, a target radio network node towards which to perform the handover.

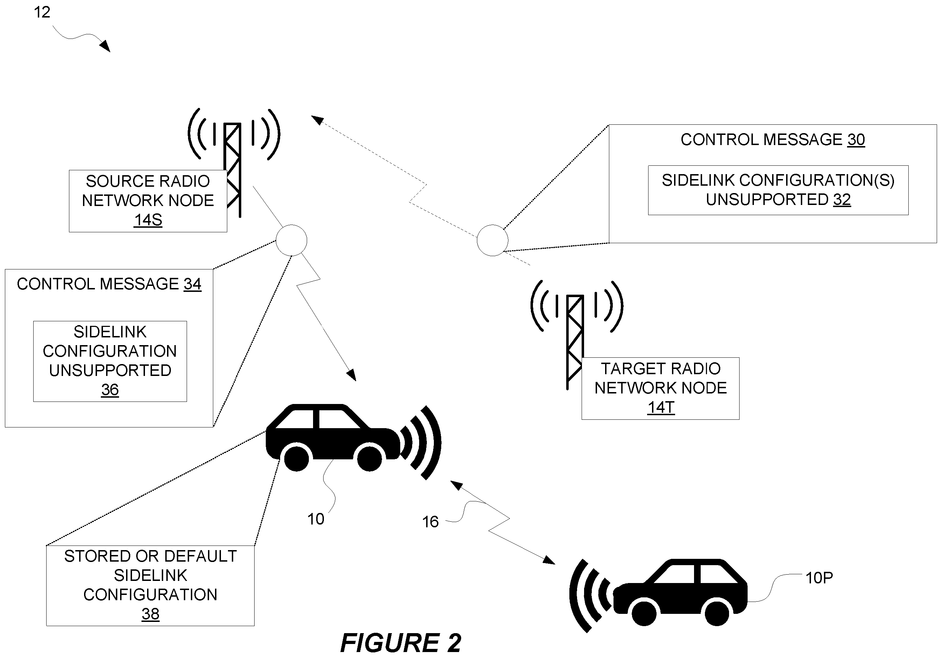

In yet other embodiments herein, though, the target radio network node 14T lacks support for configuring the sidelink 16. Some embodiments herein in this case still nonetheless enable the wireless device 10 to maintain sidelink connectivity during and/or after the handover. Figure 2 shows one example of such embodiments.

As shown in Figure 2, the source radio network node 14S receives, from the target radio network node 14T of the handover, a control message 30 that indicates the target radio network node 14T lacks support for configuring the sidelink 16 for the wireless device 10. The control message 30 may for instance include a sidelink configuration(s) unsupported 32 indication. The source radio network node 14S may then in turn transmit a control message 34 to the wireless device 10 indicating (e.g., via a sidelink configuration unsupported 36 indication) that the target radio network node 14T lacks support for configuring the sidelink 16 for the wireless device 10.

In some embodiments, this triggers the wireless device 10 to configure the sidelink 16 with a stored or default sidelink configuration 38. This may be stored for instance at the wireless device 10 for use when the wireless device 10 lacks network coverage. That is, in these embodiments, the wireless device 10 exploits a sidelink configuration 38 designated as a default or out-of-coverage configuration, even though the wireless device 10 has network coverage, because the target radio network node 14T lacks support for configuring the sidelink 16. In these and other embodiments, then, the wireless device 10 may configure the sidelinke 16 according to the default or out-of-coverage configuration 38 in advance of the handover, and then refrain from needlessly requesting a sidelink configuration from the target radio network node 14T during or after the handover. This may advantageously reduce signaling which would have otherwise been wasted on requesting a sidelink configuration for which the target radio network node 14T lacks support.

In other embodiments, the lack of sidelink configuration support by the target radio network node 14T triggers the source radio network node 14S to provide a sidelink configuration to the wireless device 10.

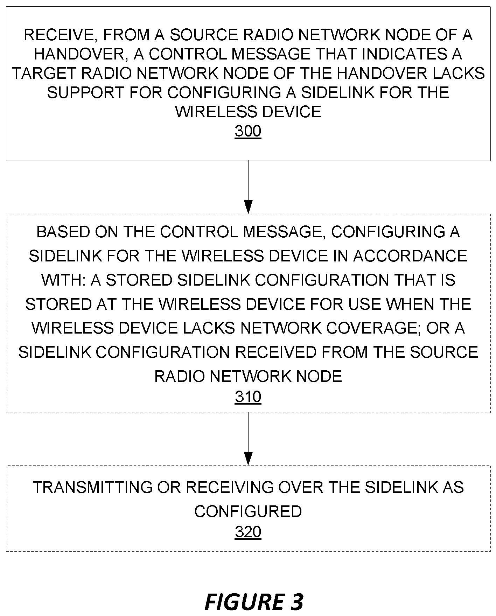

In view of the above modifications and variations, Figure 3 depicts a method performed by a wireless device 10 in accordance with particular embodiments. The method includes receiving, from a source radio network node 14S of a handover, a control message 34 that indicates a target radio network node 14T of the handover lacks support for configuring a sidelink 16 for the wireless device 10 (Block 300). The method in some embodiments also comprises based on the control message 34, configuring a sidelink 16 for the wireless device 10 in accordance with: a stored sidelink configuration 38 that is stored at the wireless device 10 for use when the wireless device 10 lacks network coverage; or a sidelink configuration received from the source radio network node 14S (Block 310). In some embodiments, the method further comprises transmitting or receiving over the sidelink 16 as configured (Block 320).

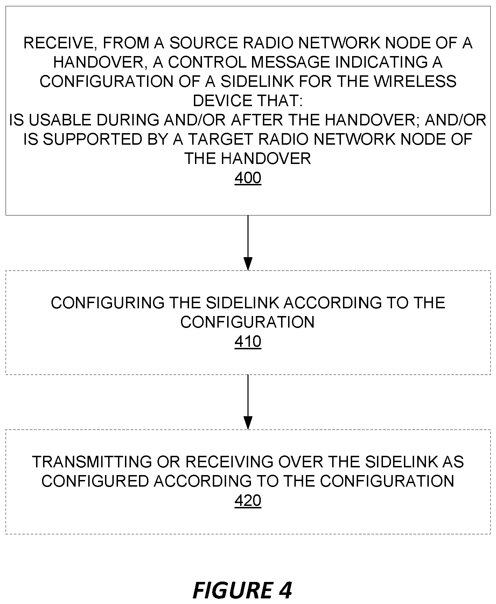

Figure 4 depicts a method performed by a wireless device in accordance with other particular embodiments. The method includes receiving, from a source radio network node 14S of a handover, a control message 28 indicating a configuration 26 of a sidelink 16 for the wireless device 10 that: is usable during and/or after the handover; and/or is supported by a target radio network node 14T of the handover (Block 400). In some embodiments, the method further comprises configuring the sidelink 16 according to the configuration 26 (Block 410). Alternatively or additionally, the method may further comprise transmitting or receiving over the sidelink 16 as configured according to the configuration 26 (Block 420).

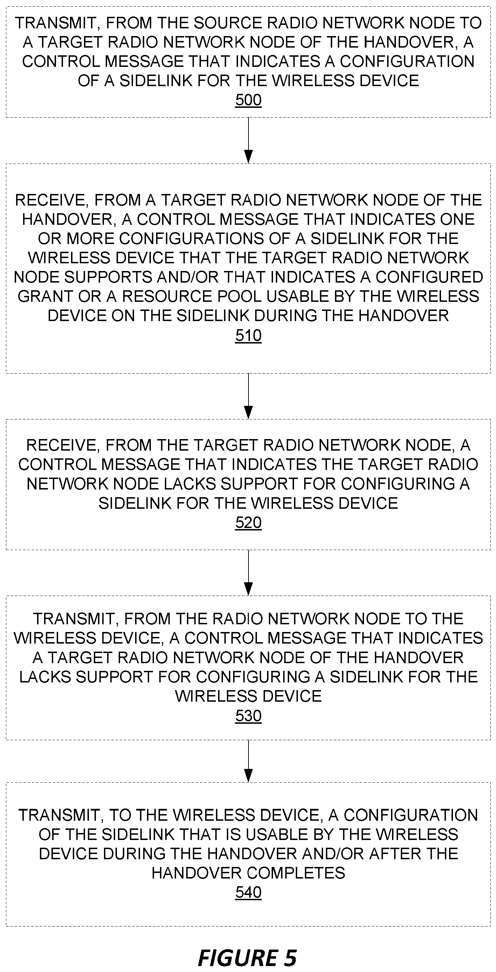

Figure 5 depicts a method performed by a radio network node that is a source radio network node 14S of a handover of a wireless device 10 in accordance with other particular embodiments. In some embodiments, the method includes transmitting, from the source radio network node 14S to a target radio network node 14T of the handover, a control message 18 that indicates a configuration 20 of a sidelink 16 for the wireless device 10 (Block 500).

The method in some embodiments may alternatively or additionally include receiving, from a target radio network node 14T of the handover, a control message 22 that indicates one or more configurations 24 of a sidelink 16 for the wireless device 10 that the target radio network node 14T supports and/or that indicates a configured grant or a resource pool usable by the wireless device 10 on the sidelink 16 during the handover (Block 510).

In other embodiments, the method may include receiving, from a target radio network node 14T of the handover, a control message 32 that indicates the target radio network node 14T lacks support for configuring a sidelink 16 for the wireless device 10 (Block 520).

In some embodiments, the method may include transmitting, from the radio network node to the wireless device 10, a control message 34 that indicates a target radio network node 14T of the handover lacks support for configuring a sidelink 16 for the wireless device 10 (Block 530).

Alternatively or additionally, the method may include transmitting, from the radio network node to the wireless device 10, a control message 28 indicating a configuration 26 of a sidelink 16 for the wireless device 10 that is usable during and/or after the handover (Block 540).

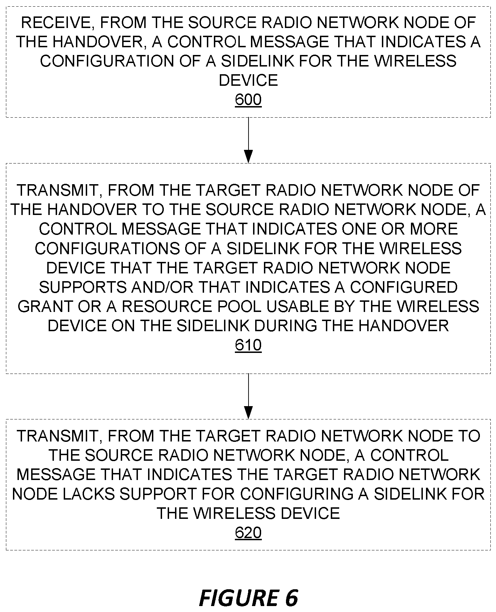

Figure 6 depicts a method performed by a radio network node that is a target radio network node 14T of a handover of a wireless device 10 in accordance with other particular embodiments. In some embodiments, the method includes receiving, from a source radio network node 14S of the handover, a control message 18 that indicates a configuration 20 of a sidelink 16 for the wireless device 10 (Block 600). Alternatively or additionally, the method may include transmitting, from the radio network node to a source radio network node 14S of the handover, a control message 22 that indicates one or more configurations 24 of a sidelink 16 for the wireless device 10 that the target radio network node 14T supports and/or that indicates a configured grant or a resource pool usable by the wireless device 10 on the sidelink 16 during the handover (Block 610). Alternatively or additionally, the method may include transmitting, from the radio network node to a source radio network node 14S of the handover, a control message 30 that indicates the target radio network node 14T lacks support for configuring a sidelink 16 for the wireless device 10 (Block 620).

Embodiments herein also include corresponding apparatuses. Embodiments herein for instance include a wireless device 10 configured to perform any of the steps of any of the embodiments described above for the wireless device 10.

Embodiments also include a wireless device 10 comprising processing circuitry and power supply circuitry. The processing circuitry is configured to perform any of the steps of any of the embodiments described above for the wireless device 10. The power supply circuitry is configured to supply power to the wireless device 10.

Embodiments further include a wireless device 10 comprising processing circuitry. The processing circuitry is configured to perform any of the steps of any of the embodiments described above for the wireless device 10. In some embodiments, the wireless device 10 further comprises communication circuitry.

Embodiments further include a wireless device 10 comprising processing circuitry and memory. The memory contains instructions executable by the processing circuitry whereby the wireless device 10 is configured to perform any of the steps of any of the embodiments described above for the wireless device 10.

Embodiments moreover include a user equipment (UE). The UE comprises an antenna configured to send and receive wireless signals. The UE also comprises radio front-end circuitry connected to the antenna and to processing circuitry, and configured to condition signals communicated between the antenna and the processing circuitry. The processing circuitry is configured to perform any of the steps of any of the embodiments described above for the wireless device 10. In some embodiments, the UE also comprises an input interface connected to the processing circuitry and configured to allow input of information into the UE to be processed by the processing circuitry. The UE may comprise an output interface connected to the processing circuitry and configured to output information from the UE that has been processed by the processing circuitry. The UE may also comprise a battery connected to the processing circuitry and configured to supply power to the UE.

Embodiments herein also include a radio network node 14S, 14T configured to perform any of the steps of any of the embodiments described above for the radio network node 14S, 14T.

Embodiments also include a radio network node 14S, 14T comprising processing circuitry and power supply circuitry. The processing circuitry is configured to perform any of the steps of any of the embodiments described above for the radio network node 14S or14T. The power supply circuitry is configured to supply power to the radio network node 14S, 14T.

Embodiments further include a radio network node 14S, 14T comprising processing circuitry. The processing circuitry is configured to perform any of the steps of any of the embodiments described above for the radio network node 14S or 14T. In some embodiments, the radio network node 14S, 14T further comprises communication circuitry.

Embodiments further include a radio network node 14S, 14T comprising processing circuitry and memory. The memory contains instructions executable by the processing circuitry whereby the radio network node 14S, 14T is configured to perform any of the steps of any of the embodiments described above for the radio network node 14S, 14T.

More particularly, the apparatuses described above may perform the methods herein and any other processing by implementing any functional means, modules, units, or circuitry. In one embodiment, for example, the apparatuses comprise respective circuits or circuitry configured to perform the steps shown in the method figures. The circuits or circuitry in this regard may comprise circuits dedicated to performing certain functional processing and/or one or more microprocessors in conjunction with memory. For instance, the circuitry may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory may include program instructions for executing one or more telecommunications and/or data communications protocols as well as instructions for carrying out one or more of the techniques described herein, in several embodiments. In embodiments that employ memory, the memory stores program code that, when executed by the one or more processors, carries out the techniques described herein.

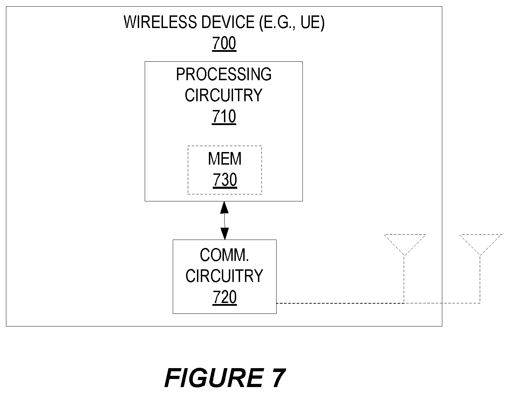

Figure 7 for example illustrates a wireless device 700 (e.g., wireless device 10) as implemented in accordance with one or more embodiments. As shown, the wireless device 700 includes processing circuitry 710 and communication circuitry 720. The communication circuitry 720 (e.g., radio circuitry) is configured to transmit and/or receive information to and/or from one or more other nodes, e.g., via any communication technology. Such communication may occur via one or more antennas that are either internal or external to the wireless device 700. The processing circuitry 710 is configured to perform processing described above, e.g., in Figure 3 and/or 4, such as by executing instructions stored in memory 730. The processing circuitry 710 in this regard may implement certain functional means, units, or modules.

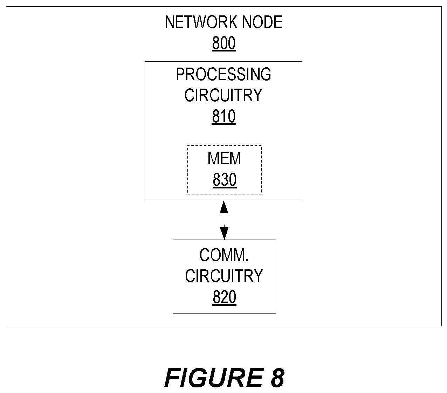

Figure 8 illustrates a network node 800 (e.g., a radio network node, which may be a source radio network node 14S or target radio network node 14T of a handover) as implemented in accordance with one or more embodiments. As shown, the network node 800 includes processing circuitry 810 and communication circuitry 820. The communication circuitry 820 is configured to transmit and/or receive information to and/or from one or more other nodes, e.g., via any communication technology. The processing circuitry 810 is configured to perform processing described above, e.g., in Figure 5 and/or 6, such as by executing instructions stored in memory 830. The processing circuitry 810 in this regard may implement certain functional means, units, or modules.

Those skilled in the art will also appreciate that embodiments herein further include corresponding computer programs.

A computer program comprises instructions which, when executed on at least one processor of an apparatus, cause the apparatus to carry out any of the respective processing described above. A computer program in this regard may comprise one or more code modules corresponding to the means or units described above.

Embodiments further include a carrier containing such a computer program. This carrier may comprise one of an electronic signal, optical signal, radio signal, or computer readable storage medium.

In this regard, embodiments herein also include a computer program product stored on a non-transitory computer readable (storage or recording) medium and comprising instructions that, when executed by a processor of an apparatus, cause the apparatus to perform as described above.

Embodiments further include a computer program product comprising program code portions for performing the steps of any of the embodiments herein when the computer program product is executed by a computing device. This computer program product may be stored on a computer readable recording medium.

Additional embodiments will now be described. At least some of these embodiments may be described as applicable in certain contexts and/or wireless network types for illustrative purposes, but the embodiments are similarly applicable in other contexts and/or wireless network types not explicitly described.

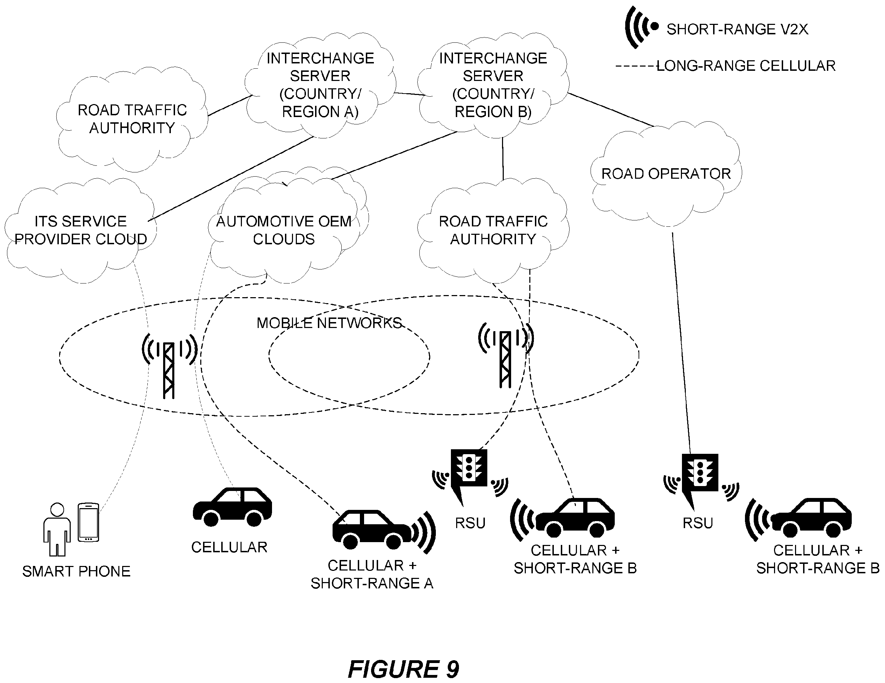

Some embodiments herein are applicable to Cellular Intelligent Transport Systems (ITS). Cellular ITS is cellular eco-system for the delivery of vehicular services and their dissemination. Such eco-system includes both short range and long range vehicle-to-everything (V2X) service transmissions, as depicted in Figure 9. In particular, short range communication involves transmissions over a Device-to-Device (D2D) link, also defined as sidelink or PC5 interface in 3GPP, towards other vehicular user equipments (UEs) or road side units (RSU). In this case, then, the sidelink 16 in Figure 1 may be exemplified as such a sidelink or PC5 interface in 3GPP. On the other hand, for long range transmission, cellular ITS considers the transmission over the Uu interface between a UE and a base station, in which case packets may be disseminated to different ITS service providers, which could be road traffic authorities, road operators, automotive OEMs, cellular operators, etc.

When it comes to the sidelink interface, the first standardization effort in 3GPP dates back to Rel.12, targeting public safety use cases. Since then, a number of enhancements have been introduced with the objective to enlarge the use cases that could benefit from the D2D technology. Particularly, in Long Term Evolution (LTE) Rel-14 and Rel-15, the extensions for the D2D work consists of supporting V2X communication, including any combination of direct communication between vehicles (V2V), pedestrians (V2P) and infrastructure (V2I).

V2X may be enhanced to support advanced V2X services beyond services supported in LTE Rel-15 V2X. Such enhancement may include quality of service (QoS) management of the radio interface including both Uu (i.e. network-to-vehicle UE communication) and sidelink (i.e. vehicle UE-to-vehicle UE communication) used for V2X operations.

While LTE V2X mainly aims at traffic safety services, New Radio (NR) V2X has a much broader scope including not only basic safety services, but also targeting non-safety applications, such as extended sensor/data sharing between vehicles, with the objective to strengthen the perception of the surrounding environment of vehicles. Hence, a new set of applications have been captured in 3GPP Technical Report (TR) 22.886 v16.2.0, such as advanced driving, vehicles platooning, cooperative maneuver between vehicles and remote driving that would require enhanced NR system and new NR sidelink framework. In this new context, the expected requirements to meet the needed data rate, capacity, reliability, latency, communication range and speed are made more stringent. What is more, both communication interfaces, PC5 and Uu, could be used to support the advanced V2X use cases, taking into account radio conditions and the environment where the enhanced V2X (eV2X) scenario takes place. For example, given the variety of services that can be transmitted over the sidelink, a robust quality of service (QoS) framework which takes into account the different performance requirements of the different V2X services seems to be needed. Additionally, new radio protocols to handle more robust and reliable communication should be designed.

In some NR embodiments, a sidelink (SL) QoS flow model is adopted. At the non-access stratum (NAS) layer, a UE maps one V2X packet into the corresponding SL QoS flow and then maps to a SL radio bearer (RB) (SLRB) at the service data adaptation protocol (SDAP) layer. In this case, a sidelink configuration as described with respect to Figure 1 may be exemplified as including a QoS flow to SLRB mapping.

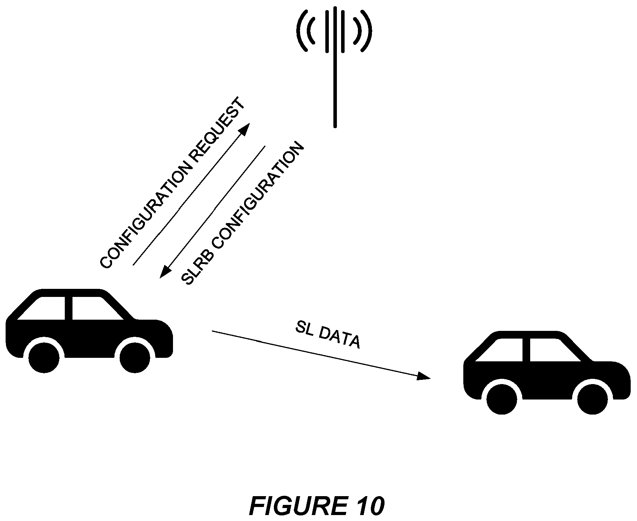

In some NR embodiments, an SLRB configuration, including the QoS flow to SLRB mapping, is either preconfigured or configured by the network (NW) when the UE is in coverage. For instance, as shown in Figure 10, when a UE in some embodiments wants to establish a new SL QoS flow/SLRB for a new service, it can send a request to the associated gNB. The request can include the QoS information of the service. The gNB then determines an appropriate SLRB configuration to support such SL QoS flow. After receiving the SLRB configuration from gNB, the UE establishes the local SLRB accordingly and prepares for data transmission over the SL. Note that to enable successful reception at the reception (RX) UE side, the transmission (TX) UE might have to inform RX UE regarding necessary parameters, e.g. sequence number space for Packet Data Convergence Protocol (PDCP) / Radio Link Control (RLC), before the data transmission starts.

Radio resource control (RRC) operation depends on the UE specific states. A UE is in either RRC_CONNECTED state, RRC_INACTIVE state or RRC_IDLE state. The different RRC states have different amounts of radio resources associated with them and that the UE may use in a given specific state. In RRC_INACTIVE and RRC_IDLE state, UE-controlled mobility based on network (NW) configuration is adopted, i.e., the UE acquires system information block (SIB), performs neighboring cell measurements and cell (re-)selection, and monitors a Paging occasion. An inactive UE stores the UE Inactive access stratum (AS) context and performs RAN-based notification area (RNA) updates.

In RRC_CONNECTED state however, NW-controlled mobility is performed. In fact, the RAN node can receive paging assistance information related to potential paging triggers, such as QoS flows or signaling, from the 5G core network (CN). The UE is thus known by the NW at node/cell level and a UE-specific bearer is established upon which UE-specific data and/or control signaling could be communicated. For example, the radio access network (RAN) can configure UE-specific RNAs that make it possible to reduce the total signaling load by configuring small RNAs for stationary UEs (optimized for low paging load) and, especially, larger RNAs for moving UEs (optimized for vehicular UEs).

Furthermore, if, e.g., there is no traffic transmission and/or reception for a certain timer period, the network can initiate the RRC connection release procedure to transit a UE in RRC_CONNECTED to RRC_IDLE; or to RRC_INACTIVE if SRB2 and at least one data radio bearer (DRB) is setup in RRC_CONNECTED.

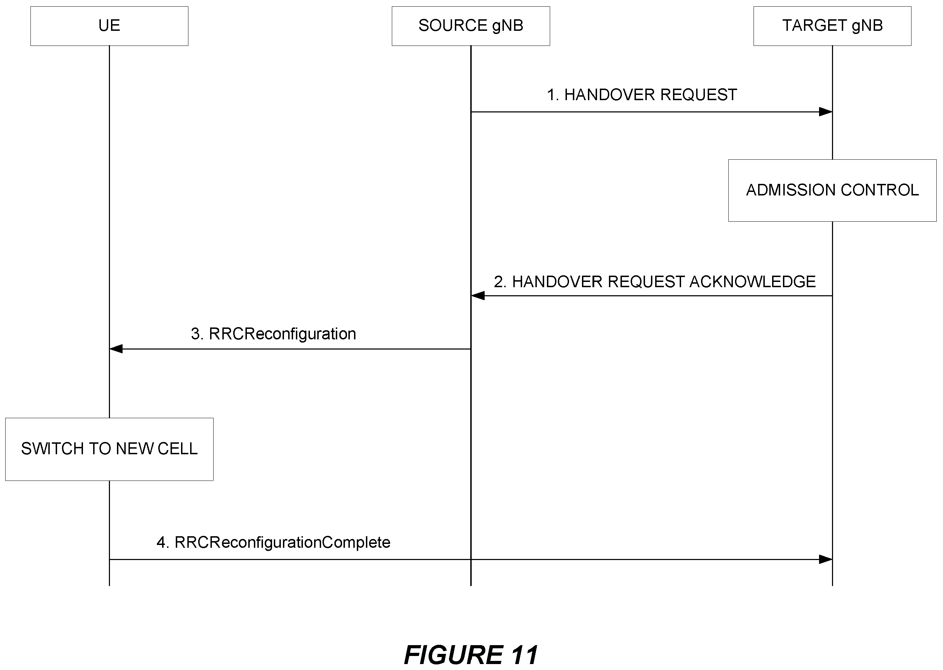

Figure 11 describes the handover procedure in NR between two gNBs, when UE is in RRC_CONNECTED state according to some embodiments. Basically, the handover function allows the exchange of information between source and target NG-RAN nodes in order to initiate the handover of a certain UE to the target.

The procedure starts when the source gNB sends a HANDOVER_REQUEST message to the target gNB, including the currently configured QoS flows to data radio bearers (DRB) mapping (Step 1). The target gNB will then perform admission control and sends back a HANDOVER REQUEST ACKNOLWDGE message indicating the admitted/non-admitted QoS flows/DRBs (Step 2). Afterwards, the source gNB will generate an RRC message to the UE to reconfigure QoS flows/DRBs when needed (Step 3), and trigger the cell switch.

On that other hand, if the handover fails, e.g. due to congestion in the target gNB, a HANDOVER PREPARATION FAILURE message is sent from the target gNB to the source gNB.

Note that the handover may happen between different radio access technologies (RATs), e.g. from source gNB to target ng-eNB or from source ng-eNB to source gNB. The procedure is in general the same as for inter-gNB case in Figure 11. Just the HANDOVER PREPARATION INFORMATION / HANDOVER COMMAND messages will be in a different format depending on the target RAT.

HANDOVER REQUEST, HANDOVER REQUEST ACKNOWLEDGEMENT, HANDOVER PREPARATION FAILURE messages are sent between gNBs/ng-eNBs via Xn interface.

Consider now sidelink resource allocation according to some embodiments. There are two different resource allocation (RA) procedures for V2X on the sidelink, i.e. NW controlled RA (so called "mode 3" in LTE and "mode 1" in NR) and autonomous RA (so called "mode 4" in LTE and "mode 2" in NR). The transmission resources are selected within a resource pool which is predefined or configured by the network.

With NW controlled RA, the NG-RAN is in charge of scheduling SL resource(s) to be used by the UE for SL transmission(s). The UE sends SL (Buffer Status Report) BSR to the NW to inform about SL data available for transmission in the SL buffers associated with the medium access control (MAC) entity. The NW then signals the resource allocation to the UE using downlink control information (DCI). NW controlled (or Mode-1) resource allocation may be realized via dynamic scheduling signalling via the Physical Downlink Control Channel (PDCCH), or by semi-persistent scheduling in which the gNB provides one or more configured SL grants. Both type-1 and type-2 configured SL grants are supported.

With autonomous RA, each device independently decides which SL radio resources to use for SL operations, based on, e.g., reading received sidelink control information (SCI) or energy detection. For both RA modes, a SCI is transmitted on physical sidelink control channel (PSCCH) to indicate the assigned sidelink resources for physical sidelink shared channel (PSSCH). Unlike NW controlled RA, which can only be performed when a UE is in RRC_CONNECTED state, autonomous RA (or Mode-2) can be performed both when the UE is in RRC_CONNECTED mode and when the UE is in INACTIVE/IDLE state, and also when the UE is under Uu coverage and out-of-coverage.. In particular, when the UE is in RRC_CONNECTED mode, the SL resource pool can be configured with dedicated RRC signalling, while for IDLE/INACTIVE mode operations, the UE shall rely on the SL resource pool provisioned in broadcasting signal, i.e. SIB.

Configured grant is supported for NR sidelink, for both type 1 and type 2. With configured grant, the gNB can allocate sidelink resources for multiple (periodical) transmissions to the UE. Type 1 configured grant is configured and activated directly via dedicated RRC signaling. Type 2 configured grant is configured via dedicated RRC signaling, but only activated/released via DCI transmitted on PDCCH.

In NR SL, the SLRB configuration and the mapping between SL QoS flow to SLRB can be provided by the gNB/ng-eNB. If the source gNB/ng-eNB provides an SLRB configuration and flow-to-SLRB mapping to a UE, but that SLRB configuration and/or flow-to-SLRB mapping is not valid at the target gNB/ng-NB, SL connectivity could heretofore be interrupted due to the handover. Indeed, the UE heretofore will not know what SL configuration to use.

Some embodiments herein include methods to handle SL configuration when a UE moves from one RAN node, e.g. gNB/ng-eNB, to another. Generally, the source RAN node in some embodiments herein will inform the target RAN node about the current SL configurations of the UE and coordinate with the target RAN node about the proper SL configurations to be used during and/or after the handover. Then, the source RAN node may reconfigure the UE and prepare for the handover procedure.

According to some embodiments, then, there is an exchange of SL QoS flow/SLRB configurations (as an example of a sidelink configuration) between the source and target gNB/ng-eNB during handover operation. For example, the target gNB may coordinate with source gNB about the new resource allocation and QoS configuration before the handover. Some embodiments therefore provide methods to handle NR SL configuration during handover procedure in NR.

Certain embodiments may provide one or more of the following technical advantage(s). Some embodiments ensure that the Target and Source nodes can coordinate the SL resources of the UE during inter-RAT handover. Alternatively or additionally, some embodiments ensure that SL service continuity during handover is improved. Alternatively or additionally, some embodiments avoid unnecessary signaling from UE to gNB as the UE signaling patterns follow the same principles as the Evolved Packet Core (EPC).

More particularly, some embodiments include methods for handling SL configuration when a UE moves from one RAN node, e.g. gNB/ng-eNB, to another RAN node. As an example of the message exchange shown in Figure 1, the source RAN node according to some embodiments will exchange with the target RAN node the current SL configurations of the UE, and coordinate about the proper SL configurations to be used during and/or after the handover (e.g., via control message 18 and/or control message 22 in Figure 1). Then, the source RAN node may reconfigure the UE (e.g., via control message 28) and prepare for the handover procedure.

In one embodiment, the exchange may happen within some X2/Xn message, e.g., HO request message or, in another embodiment, this may be explicitly done via inter-node RRC messages, e.g., within the *HandoverPreparationInformation ,* CG-Config, or CG-Configlnfo. These are all examples of the control message 18 and/or control message 22 in Figure 1.

In embodiment 1, SL configuration information that is exchanged between the source RAN node, e.g. gNB/ng-eNB and target RAN NODE, can be any of the following (but not limited to):
- SL QoS flow and SLRB configuration for UE SL operation for RRC CONNECTED/INACTIVE/IDLE mode, (note that gNB may provide this RRC INACTIVE/IDLE configuration even when the UE is in RRC CONNECTED MODE) including:
   ∘ QoS parameters associated with each SL QoS flow
   ∘ SL QoS flow to SLRB mapping
- SIDELINK UE INFORMATION that indicates the running services, interested frequencies, source and destination IDs
- SL Configured grant
- SL TX/RX resource pool

In embodiment 2, for UEs in RRC_CONNECTED state, when source RAN node triggers the handover procedure by sending the HANDOVER REQUEST message to the target RAN node, it also includes the SL configuration as described in embodiment 1. Accordingly, such a HANDOVER REQUEST message with the SL configuration may be an example of control message 18 in Figure 1.

In embodiment 2a, for UEs in RRC_CONNECTED state, when source RAN node need to trigger the handover procedure by sending the HANDOVER REQUEST message to the target RAN node, the SL configurations as described in embodiment 1 are included in the inter-node RRC messages and sent as a container, e.g., includes the *HandoverPreparationInformation,* CG-Config, or CG-Configlnfo.

In embodiment 2b, the handover request may be sent to multiple target RAN nodes or, according to legacy behavior, to only the one selected by the source RAN node based on the provided UE measurements.

In embodiment 3, as dependent of embodiment 2-2b, the target RAN node may accept or reject the handover request,

If the handover request is accepted, the target RAN node sends HANDOVER REQUEST ACKNOWLEDGEMENT message to the source RAN including the list of admitted/updated/removed SL configurations. Accordingly, such a HANDOVER REQUEST ACKNOWLEDGEMENT message with the list may be an example of control message 22 in Figure 1. In some embodiments, the target RAN node may adopt different SLRB configuration for a certain SL QoS flow. In one case, the handover request is accepted by the target RAN node but no SL configurations are provided, meaning that the handover guarantees the normal Uu operations of the UE but not the SL ones. In that case it is beneficial to add a special indicator in the HANDOVER REQUEST ACKNOWLEDGEMENT message indicating if the target RAN node supports SL configuration or not. If the target RAN node does not support any SL configuration, the UE may adopt e.g., an out-of-coverage (OoC) SL configuration in advance before HO and will not request any SL configuration from the target RAN node after HO. Alternatively or additionally, the target RAN node may provide certain configured grant or TX/RX resource pool that a UE can use during handover.

If the handover request is rejected due to congested resources for SL transmission, the target RAN node in some embodiments sends HANDOVER PREPARATION FAILURE message to the source RAN node and indicates the reason due to congested resources for SL transmission.

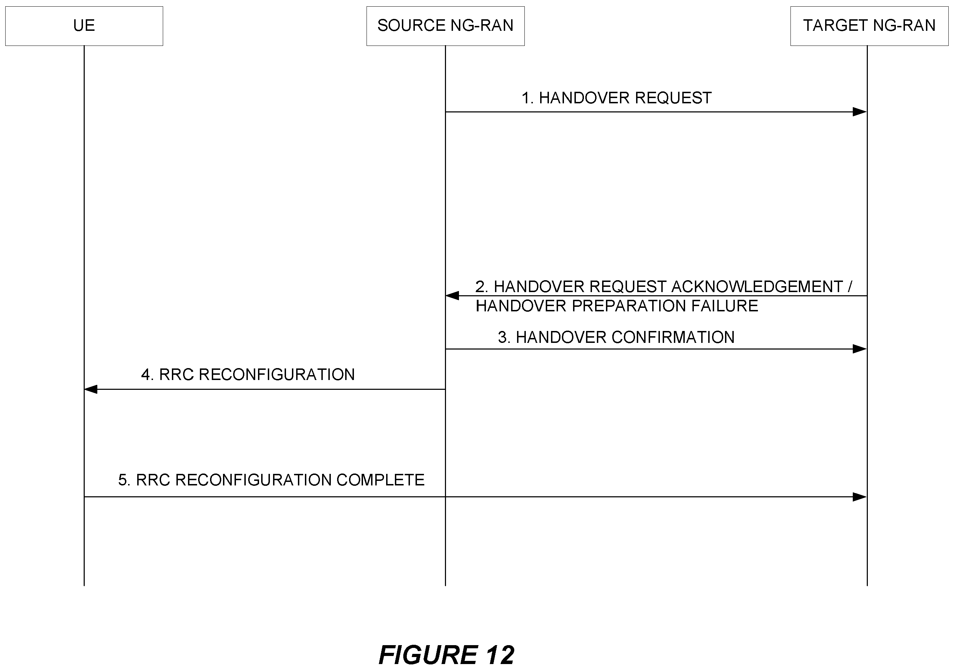

In embodiment 4, as dependent of embodiment 2-2b, the target RAN node informs the source RAN node about supported Uu/SL configurations, and it is up to source RAN node to decide whether to conduct handover to the target node, depending on e.g. the QoS requirement of both Uu and SL services of the UE to be HOed. See Figure 12.

Different from embodiment 3, in this case, there could be multiple candidate target RAN nodes to handover to and it is up to source RAN node to select the best target RAN node according to its supported Uu/SL configurations. As aforementioned in embodiment 2b, the same HANDOVER REQUEST message will be sent to multiple Target RAN node candidates. Each target RAN node candidate will reply independently with HANDOVER REQUEST ACKNOWLEDGE or HANDOVER PREPARATION FAILURE message as described in embodiment 3.

Once the source RAN node identifies the best target RAN node for handover, it sends HANDOVER CONFIRM message to the target RAN node and sends RRC RECONFIGURATION message to the UE. The HANDOVER CONFIRMATION message could just be an indicator to acknowledge the selected target RAN node about upcoming HO. The RRC RECONFIGURATION message may also be referred to as a handover command message in some instances. In this case, where the sidelink configuration includes a configured grant to be used over the sidelink, the configured grant for the sidelink is provided in a handover command to the UE. Regardless, the RRC RECONFIGURATION message sent to the UE is one example of control message 28 in Figure 1.

In embodiment 5, as it is dependent of embodiment 3 and 4, if the handover between RAN node and target RAN node does not provide any SL configuration, the source RAN node will inform UE via RRC signaling with any of the following: (i) The target RAN node does not support any SL configuration (in this case, the UE will not request any SL configuration from the target RAN node after handover); or (ii) SL configuration, provided from the source RAN node, that can be adopted when UE leaves the source RAN node coverage.

In embodiment 6, as it is dependent of embodiment 3, if a (temporary) SL configured grant may be exchanged between the target RAN node and the source RAN node, and provided to the UE for SL transmission during the handover period, the initial configuration and the activation message is signaled from the source RAN node to the UE while it is only deactivated when the current handover procedure is cancelled or the handover procedure finishes and UE receives the deactivation message from the target RAN node. In particular, for SL configured grant type 1, it is configured/activated by the RRC message enabling the grant from source RAN node to the UE. The RRC message should be sent after receiving the HO accept from the target node or after the source node finally decides the target node to HO to. The type 1 grant is deactivated using the RRC message disabling the grant or the RRC/DCI message enabling a new grant from the target RAN node. For SL configured grant type 2, it is configured using the RRC message and activated via PDCCH message from the source RAN node to the UE. The PDCCH message activating the grant should be sent after receiving the HO accept from the target node or after the source node finally decides the target node to HO to. The type 2 grant is deactivated via PDCCH message from the target RAN node to the UE.

In embodiment 7, for RRC INACTIVE scenario, there is no explicit handover request or accept/reject between the source and target RAN node. Instead, UE may reselect the cell and camp on a new cell due to e.g. supported RAT or services. In this case, once the UE reconnects to a new RAN node, the original RAN node, where the SL configuration was stored, sends the relevant SL configuration of the UE to the new RAN node. In such a case, the SL UE context is retrieved by the new selected RAN node or can be sent by the old RAN node to the new one.

Consider now a non-limiting example of adding the solution into the existing XnAP signaling with the corresponding changes to the handover operations procedures.

For instance, the *SL Session Resources To Be Setup List* IE can be added in the HANDOVER REQUEST message to include SL session resources related information (embodiment 1) to transfer the SL UE context between RAN node nodes (as described above in embodiment 2-2b).

The solution may be added to the existing X2AP signaling in a similar way.

### ***************************Example TS38.423 Change Start******************************

### 9.1.1.1 HANDOVER REQUEST

This message is sent by the source NG-RAN node to the target NG-RAN node to request the preparation of resources for a handover.

Direction: source NG-RAN node → target NG-RAN node.

| **IE/Group Name** | **Presence** | **Range** | **IE type and reference** | **Semantics description** | **Criticality** | **Assigned Criticality** |
|---|---|---|---|---|---|---|
| Message Type | M | | 9.2.3.1 | | YES | reject |
| Source NG-RAN node UE XnAP ID reference | M | | NG-RAN node UE XnAP ID 9.2.3.16 | Allocated at the source NG-RAN node | YES | reject |
| Cause | M | | 9.2.3.2 | | YES | reject |
| Target Cell Global ID | M | | 9.2.3.25 | Includes either an E-UTRA CGI or an NR CGI | YES | reject |
| GUAMI | M | | 9.2.3.24 | | YES | reject |

| | | | | | | | |
|---|---|---|---|---|---|---|---|
| **UE Context Information** | | | *1* | | | YES | reject |
| | >NG-C UE associated Signalling reference | M | | AMF UE NGAP ID 9.2.3.26 | Allocated at the AMF on the source NG-C connection. | - | |
| | >Signalling TNL association address at source NG-C side | M | | CP Transport Layer Information 9.2.3.31 | This IE indicates the AMF's IP address of the SCTP association used at the source NG-C interface instance. | - | |
| | >UE Security Capabilities | M | | 9.2.3.49 | | - | |
| | >AS Security Information | M | | 9.2.3.50 | | - | |
| | >Index to RAT/Frequency Selection Priority | O | | 9.2.3.23 | | - | |
| | >UE Aggregate Maximum Bit Rate | M | | 9.2.3.17 | | - | |
| | >PDU Session Resources To Be Setup List | | *1* | 9.2.1.1 | Similar to NG-C signalling, containing UL tunnel information per PDU Session Resource; | - | |
| | | | | | and in addition, the source side QoS flow ⇔ DRB mapping | | |
| >SL session | | O | | | Contains the currently configured SL | | |

| Resources To Be Setup List (option1) | | | | | QoS flow ⇔ SLRB mapping, including QoS parameters associated with each SL QoS flow ID. | | |
|---|---|---|---|---|---|---|---|
| >SL session Resources To Be Setup List (option2) | | O | | OCTET STRING | Includes *HandoverPreparationInformation and*/*or CG-ConfigInfo* Message defined in TS 38.331 | | |
| | >RRC Context | M | | OCTET STRING | Either includes the *HandoverPreparationInformation* message as defined in subclause 10.2.2. of TS 36.331 [14], if the target NG-RAN node is an ng-eNB, or the *HandoverPreparationInformation* message as defined in subclause 11.2.2 of TS 38.331 [10], if the target NG-RAN node is a qNB. | - | |
| | >Location Reporting Information | O | | 9.2.3.47 | Includes the necessary parameters for location reporting. | - | |
| | >Mobility Restriction List | O | | 9.2.3.53 | | - | |
| Trace Activation | | O | | 9.2.3.55 | | YES | ignore |
| Masked IMEISV | | O | | 9.2.3.32 | | YES | ignore |
| UE History Information | | M | | 9.2.3.64 | | YES | ignore |
| **UE Context Reference at the S-NG-RAN node** | | O | | | | YES | ignore |
| | >Global NG-RAN Node ID | M | | 9.2.2.3 | | - | |
| | >S-NG-RAN node UE XnAP ID | M | | NG-RAN node UE XnAP ID 9.2.3.16 | | - | |

### ****************************** Example TS38.423 Change End *******************************

### ****************************** Example TS38.423 Change Start ******************************

### 9.1.1.2 HANDOVER REQUEST ACKNOWLEDGE

This message is sent by the target NG-RAN node to inform the source NG-RAN node about the prepared resources at the target.

Direction: target NG-RAN node → source NG-RAN node.

| **IE/Group Name** | **Presence** | **Range** | **IE type and reference** | **Semantics description** | **Criticality** | **Assigned Criticality** |
|---|---|---|---|---|---|---|
| Message Type | M | | 9.2.3.1 | | YES | reject |
| Source NG-RAN node UE XnAP ID | M | | NG-RAN node UE XnAP ID 9.2.3.16 | Allocated at the source NG-RAN node | YES | ignore |
| Target NG-RAN | M | | NG-RAN | Allocated at the | YES | ignore |
| node UE XnAP ID | | | node UE XnAP ID 9.2.3.16 | target NG-RAN node | | |
| PDU Session Resources Admitted List | M | | 9.2.1.2 | | YES | ignore |
| PDU Session Resources Not Admitted List | O | | 9.2.1.3 | | YES | ignore |
| SL Support Indicator | O | | | Indicates if the target NG-RAN supports SL operation configuration | | |
| | | | | | | |
| SL Session Resources Admitted List | O | | | Admitted QoS flow and SLRB | | |
| SL Session Resources Not Admitted List | O | | | Not Admitted QoS flow and SLRB | | |
| Target NG-RAN node To Source NG-RAN node Transparent Container | M | | OCTET STRING | Either includes the *HandoverCommand* message as defined in subclause 10.2.2 of TS 36.331 [14], if the target NG-RAN node is an ng-eNB, or the *HandoverCommand* message as defined in subclause 11.2.2 of TS 38.331 [10], if the target NG-RAN node is a qNB. | YES | ignore |
| UE Context Kept Indicator | O | | 9.2.3.68 | | YES | ignore |
| Criticality Diagnostics | O | | 9.2.3.3 | | YES | ignore |

### ***************************Example TS38.423 Change End*******************************

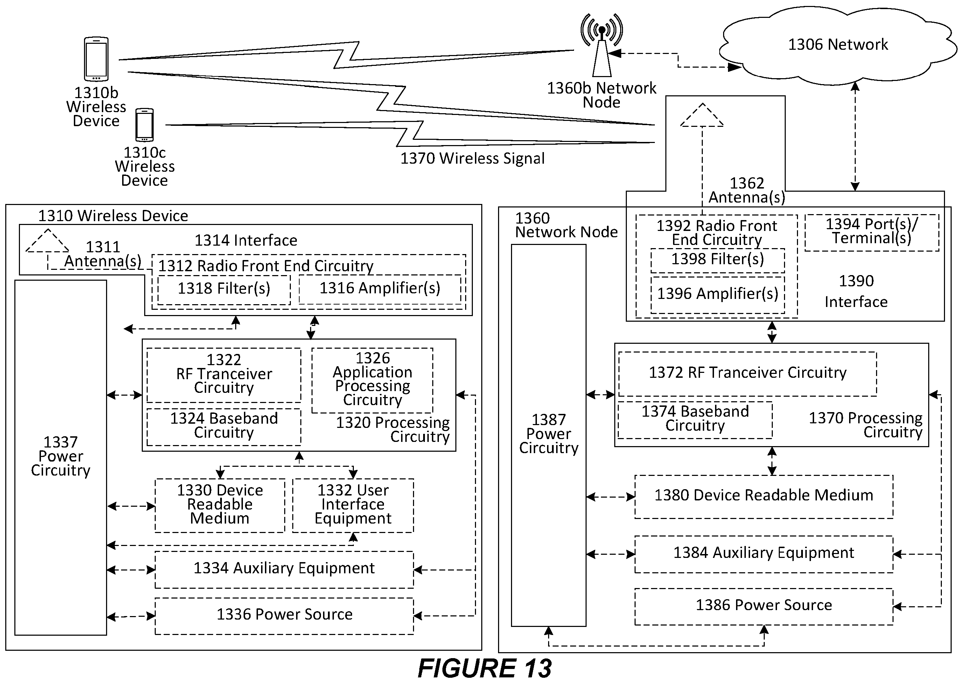

Although the subject matter described herein may be implemented in any appropriate type of system using any suitable components, the embodiments disclosed herein are described in relation to a wireless network, such as the example wireless network illustrated in Figure 13. For simplicity, the wireless network of Figure 13 only depicts network 1306, network nodes 1360 and 1360b, and WDs 1310, 1310b, and 1310c. In practice, a wireless network may further include any additional elements suitable to support communication between wireless devices or between a wireless device and another communication device, such as a landline telephone, a service provider, or any other network node or end device. Of the illustrated components, network node 1360 and wireless device (WD) 1310 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), Narrowband Internet of Things (NB-IoT), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 1306 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 1360 and WD 1310 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 13, network node 1360 includes processing circuitry 1370, device readable medium 1380, interface 1390, auxiliary equipment 1384, power source 1386, power circuitry 1387, and antenna 1362. Although network node 1360 illustrated in the example wireless network of Figure 13 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 1360 are depicted as single boxes located within a larger box, or nested within multiple boxes, in practice, a network node may comprise multiple different physical components that make up a single illustrated component (e.g., device readable medium 1380 may comprise multiple separate hard drives as well as multiple RAM modules).

Similarly, network node 1360 may be composed of multiple physically separate components (e.g., a NodeB component and a RNC component, or a BTS component and a BSC component, etc.), which may each have their own respective components. In certain scenarios in which network node 1360 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 1360 may be configured to support multiple radio access technologies (RATs). In such embodiments, some components may be duplicated (e.g., separate device readable medium 1380 for the different RATs) and some components may be reused (e.g., the same antenna 1362 may be shared by the RATs). Network node 1360 may also include multiple sets of the various illustrated components for different wireless technologies integrated into network node 1360, such as, for example, GSM, WCDMA, LTE, NR, WiFi, or Bluetooth wireless technologies. These wireless technologies may be integrated into the same or different chip or set of chips and other components within network node 1360.

Processing circuitry 1370 is configured to perform any determining, calculating, or similar operations (e.g., certain obtaining operations) described herein as being provided by a network node. These operations performed by processing circuitry 1370 may include processing information obtained by processing circuitry 1370 by, for example, converting the obtained information into other information, comparing the obtained information or converted information to information stored in the network node, and/or performing one or more operations based on the obtained information or converted information, and as a result of said processing making a determination.

Processing circuitry 1370 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1360 components, such as device readable medium 1380, network node 1360 functionality. For example, processing circuitry 1370 may execute instructions stored in device readable medium 1380 or in memory within processing circuitry 1370. Such functionality may include providing any of the various wireless features, functions, or benefits discussed herein. In some embodiments, processing circuitry 1370 may include a system on a chip (SOC).

In some embodiments, processing circuitry 1370 may include one or more of radio frequency (RF) transceiver circuitry 1372 and baseband processing circuitry 1374. In some embodiments, radio frequency (RF) transceiver circuitry 1372 and baseband processing circuitry 1374 may be on separate chips (or sets of chips), boards, or units, such as radio units and digital units. In alternative embodiments, part or all of RF transceiver circuitry 1372 and baseband processing circuitry 1374 may be on the same chip or set of chips, boards, or units

In certain embodiments, some or all of the functionality described herein as being provided by a network node, base station, eNB or other such network device may be performed by processing circuitry 1370 executing instructions stored on device readable medium 1380 or memory within processing circuitry 1370. In alternative embodiments, some or all of the functionality may be provided by processing circuitry 1370 without executing instructions stored on a separate or discrete device readable medium, such as in a hard-wired manner. In any of those embodiments, whether executing instructions stored on a device readable storage medium or not, processing circuitry 1370 can be configured to perform the described functionality. The benefits provided by such functionality are not limited to processing circuitry 1370 alone or to other components of network node 1360, but are enjoyed by network node 1360 as a whole, and/or by end users and the wireless network generally.

Device readable medium 1380 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 1370. Device readable medium 1380 may store any suitable instructions, data or information, including a computer program, software, an application including one or more of logic, rules, code, tables, etc. and/or other instructions capable of being executed by processing circuitry 1370 and, utilized by network node 1360. Device readable medium 1380 may be used to store any calculations made by processing circuitry 1370 and/or any data received via interface 1390. In some embodiments, processing circuitry 1370 and device readable medium 1380 may be considered to be integrated.

Interface 1390 is used in the wired or wireless communication of signalling and/or data between network node 1360, network 1306, and/or WDs 1310. As illustrated, interface 1390 comprises port(s)/terminal(s) 1394 to send and receive data, for example to and from network 1306 over a wired connection. Interface 1390 also includes radio front end circuitry 1392 that may be coupled to, or in certain embodiments a part of, antenna 1362. Radio front end circuitry 1392 comprises filters 1398 and amplifiers 1396. Radio front end circuitry 1392 may be connected to antenna 1362 and processing circuitry 1370. Radio front end circuitry may be configured to condition signals communicated between antenna 1362 and processing circuitry 1370. Radio front end circuitry 1392 may receive digital data that is to be sent out to other network nodes or WDs via a wireless connection. Radio front end circuitry 1392 may convert the digital data into a radio signal having the appropriate channel and bandwidth parameters using a combination of filters 1398 and/or amplifiers 1396. The radio signal may then be transmitted via antenna 1362. Similarly, when receiving data, antenna 1362 may collect radio signals which are then converted into digital data by radio front end circuitry 1392. The digital data may be passed to processing circuitry 1370. In other embodiments, the interface may comprise different components and/or different combinations of components.

In certain alternative embodiments, network node 1360 may not include separate radio front end circuitry 1392, instead, processing circuitry 1370 may comprise radio front end circuitry and may be connected to antenna 1362 without separate radio front end circuitry 1392. Similarly, in some embodiments, all or some of RF transceiver circuitry 1372 may be considered a part of interface 1390. In still other embodiments, interface 1390 may include one or more ports or terminals 1394, radio front end circuitry 1392, and RF transceiver circuitry 1372, as part of a radio unit (not shown), and interface 1390 may communicate with baseband processing circuitry 1374, which is part of a digital unit (not shown).

Antenna 1362 may include one or more antennas, or antenna arrays, configured to send and/or receive wireless signals. Antenna 1362 may be coupled to radio front end circuitry 1390 and may be any type of antenna capable of transmitting and receiving data and/or signals wirelessly. In some embodiments, antenna 1362 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 1362 may be separate from network node 1360 and may be connectable to network node 1360 through an interface or port.

Antenna 1362, interface 1390, and/or processing circuitry 1370 may be configured to perform any receiving operations and/or certain obtaining operations described herein as being performed by a network node. Any information, data and/or signals may be received from a wireless device, another network node and/or any other network equipment. Similarly, antenna 1362, interface 1390, and/or processing circuitry 1370 may be configured to perform any transmitting operations described herein as being performed by a network node. Any information, data and/or signals may be transmitted to a wireless device, another network node and/or any other network equipment.

Power circuitry 1387 may comprise, or be coupled to, power management circuitry and is configured to supply the components of network node 1360 with power for performing the functionality described herein. Power circuitry 1387 may receive power from power source 1386. Power source 1386 and/or power circuitry 1387 may be configured to provide power to the various components of network node 1360 in a form suitable for the respective components (e.g., at a voltage and current level needed for each respective component). Power source 1386 may either be included in, or external to, power circuitry 1387 and/or network node 1360. For example, network node 1360 may be connectable to an external power source (e.g., an electricity outlet) via an input circuitry or interface such as an electrical cable, whereby the external power source supplies power to power circuitry 1387. As a further example, power source 1386 may comprise a source of power in the form of a battery or battery pack which is connected to, or integrated in, power circuitry 1387. The battery may provide backup power should the external power source fail. Other types of power sources, such as photovoltaic devices, may also be used.

Alternative embodiments of network node 1360 may include additional components beyond those shown in Figure 13 that may be responsible for providing certain aspects of the network node's functionality, including any of the functionality described herein and/or any functionality necessary to support the subject matter described herein. For example, network node 1360 may include user interface equipment to allow input of information into network node 1360 and to allow output of information from network node 1360. This may allow a user to perform diagnostic, maintenance, repair, and other administrative functions for network node 1360.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc.. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 1310 includes antenna 1311, interface 1314, processing circuitry 1320, device readable medium 1330, user interface equipment 1332, auxiliary equipment 1334, power source 1336 and power circuitry 1337. WD 1310 may include multiple sets of one or more of the illustrated components for different wireless technologies supported by WD 1310, such as, for example, GSM, WCDMA, LTE, NR, WiFi, WiMAX, NB-loT, or Bluetooth wireless technologies, just to mention a few. These wireless technologies may be integrated into the same or different chips or set of chips as other components within WD 1310.

Antenna 1311 may include one or more antennas or antenna arrays, configured to send and/or receive wireless signals, and is connected to interface 1314. In certain alternative embodiments, antenna 1311 may be separate from WD 1310 and be connectable to WD 1310 through an interface or port. Antenna 1311, interface 1314, and/or processing circuitry 1320 may be configured to perform any receiving or transmitting operations described herein as being performed by a WD. Any information, data and/or signals may be received from a network node and/or another WD. In some embodiments, radio front end circuitry and/or antenna 1311 may be considered an interface.

As illustrated, interface 1314 comprises radio front end circuitry 1312 and antenna 1311. Radio front end circuitry 1312 comprise one or more filters 1318 and amplifiers 1316. Radio front end circuitry 1314 is connected to antenna 1311 and processing circuitry 1320, and is configured to condition signals communicated between antenna 1311 and processing circuitry 1320. Radio front end circuitry 1312 may be coupled to or a part of antenna 1311. In some embodiments, WD 1310 may not include separate radio front end circuitry 1312; rather, processing circuitry 1320 may comprise radio front end circuitry and may be connected to antenna 1311. Similarly, in some embodiments, some or all of RF transceiver circuitry 1322 may be considered a part of interface 1314. Radio front end circuitry 1312 may receive digital data that is to be sent out to other network nodes or WDs via a wireless connection. Radio front end circuitry 1312 may convert the digital data into a radio signal having the appropriate channel and bandwidth parameters using a combination of filters 1318 and/or amplifiers 1316. The radio signal may then be transmitted via antenna 1311. Similarly, when receiving data, antenna 1311 may collect radio signals which are then converted into digital data by radio front end circuitry 1312. The digital data may be passed to processing circuitry 1320. In other embodiments, the interface may comprise different components and/or different combinations of components.

Processing circuitry 1320 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 1310 components, such as device readable medium 1330, WD 1310 functionality. Such functionality may include providing any of the various wireless features or benefits discussed herein. For example, processing circuitry 1320 may execute instructions stored in device readable medium 1330 or in memory within processing circuitry 1320 to provide the functionality disclosed herein.

As illustrated, processing circuitry 1320 includes one or more of RF transceiver circuitry 1322, baseband processing circuitry 1324, and application processing circuitry 1326. In other embodiments, the processing circuitry may comprise different components and/or different combinations of components. In certain embodiments processing circuitry 1320 of WD 1310 may comprise a SOC. In some embodiments, RF transceiver circuitry 1322, baseband processing circuitry 1324, and application processing circuitry 1326 may be on separate chips or sets of chips. In alternative embodiments, part or all of baseband processing circuitry 1324 and application processing circuitry 1326 may be combined into one chip or set of chips, and RF transceiver circuitry 1322 may be on a separate chip or set of chips. In still alternative embodiments, part or all of RF transceiver circuitry 1322 and baseband processing circuitry 1324 may be on the same chip or set of chips, and application processing circuitry 1326 may be on a separate chip or set of chips. In yet other alternative embodiments, part or all of RF transceiver circuitry 1322, baseband processing circuitry 1324, and application processing circuitry 1326 may be combined in the same chip or set of chips. In some embodiments, RF transceiver circuitry 1322 may be a part of interface 1314. RF transceiver circuitry 1322 may condition RF signals for processing circuitry 1320.

In certain embodiments, some or all of the functionality described herein as being performed by a WD may be provided by processing circuitry 1320 executing instructions stored on device readable medium 1330, which in certain embodiments may be a computer-readable storage medium. In alternative embodiments, some or all of the functionality may be provided by processing circuitry 1320 without executing instructions stored on a separate or discrete device readable storage medium, such as in a hard-wired manner. In any of those particular embodiments, whether executing instructions stored on a device readable storage medium or not, processing circuitry 1320 can be configured to perform the described functionality. The benefits provided by such functionality are not limited to processing circuitry 1320 alone or to other components of WD 1310, but are enjoyed by WD 1310 as a whole, and/or by end users and the wireless network generally.

Processing circuitry 1320 may be configured to perform any determining, calculating, or similar operations (e.g., certain obtaining operations) described herein as being performed by a WD. These operations, as performed by processing circuitry 1320, may include processing information obtained by processing circuitry 1320 by, for example, converting the obtained information into other information, comparing the obtained information or converted information to information stored by WD 1310, and/or performing one or more operations based on the obtained information or converted information, and as a result of said processing making a determination.

Device readable medium 1330 may be operable to store a computer program, software, an application including one or more of logic, rules, code, tables, etc. and/or other instructions capable of being executed by processing circuitry 1320. Device readable medium 1330 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 1320. In some embodiments, processing circuitry 1320 and device readable medium 1330 may be considered to be integrated.

User interface equipment 1332 may provide components that allow for a human user to interact with WD 1310. Such interaction may be of many forms, such as visual, audial, tactile, etc. User interface equipment 1332 may be operable to produce output to the user and to allow the user to provide input to WD 1310. The type of interaction may vary depending on the type of user interface equipment 1332 installed in WD 1310. For example, if WD 1310 is a smart phone, the interaction may be via a touch screen; if WD 1310 is a smart meter, the interaction may be through a screen that provides usage (e.g., the number of gallons used) or a speaker that provides an audible alert (e.g., if smoke is detected). User interface equipment 1332 may include input interfaces, devices and circuits, and output interfaces, devices and circuits. User interface equipment 1332 is configured to allow input of information into WD 1310, and is connected to processing circuitry 1320 to allow processing circuitry 1320 to process the input information. User interface equipment 1332 may include, for example, a microphone, a proximity or other sensor, keys/buttons, a touch display, one or more cameras, a USB port, or other input circuitry. User interface equipment 1332 is also configured to allow output of information from WD 1310, and to allow processing circuitry 1320 to output information from WD 1310. User interface equipment 1332 may include, for example, a speaker, a display, vibrating circuitry, a USB port, a headphone interface, or other output circuitry. Using one or more input and output interfaces, devices, and circuits, of user interface equipment 1332, WD 1310 may communicate with end users and/or the wireless network, and allow them to benefit from the functionality described herein.

Auxiliary equipment 1334 is operable to provide more specific functionality which may not be generally performed by WDs. This may comprise specialized sensors for doing measurements for various purposes, interfaces for additional types of communication such as wired communications etc. The inclusion and type of components of auxiliary equipment 1334 may vary depending on the embodiment and/or scenario.

Power source 1336 may, in some embodiments, be in the form of a battery or battery pack. Other types of power sources, such as an external power source (e.g., an electricity outlet), photovoltaic devices or power cells, may also be used. WD 1310 may further comprise power circuitry 1337 for delivering power from power source 1336 to the various parts of WD 1310 which need power from power source 1336 to carry out any functionality described or indicated herein. Power circuitry 1337 may in certain embodiments comprise power management circuitry. Power circuitry 1337 may additionally or alternatively be operable to receive power from an external power source; in which case WD 1310 may be connectable to the external power source (such as an electricity outlet) via input circuitry or an interface such as an electrical power cable. Power circuitry 1337 may also in certain embodiments be operable to deliver power from an external power source to power source 1336. This may be, for example, for the charging of power source 1336. Power circuitry 1337 may perform any formatting, converting, or other modification to the power from power source 1336 to make the power suitable for the respective components of WD 1310 to which power is supplied.

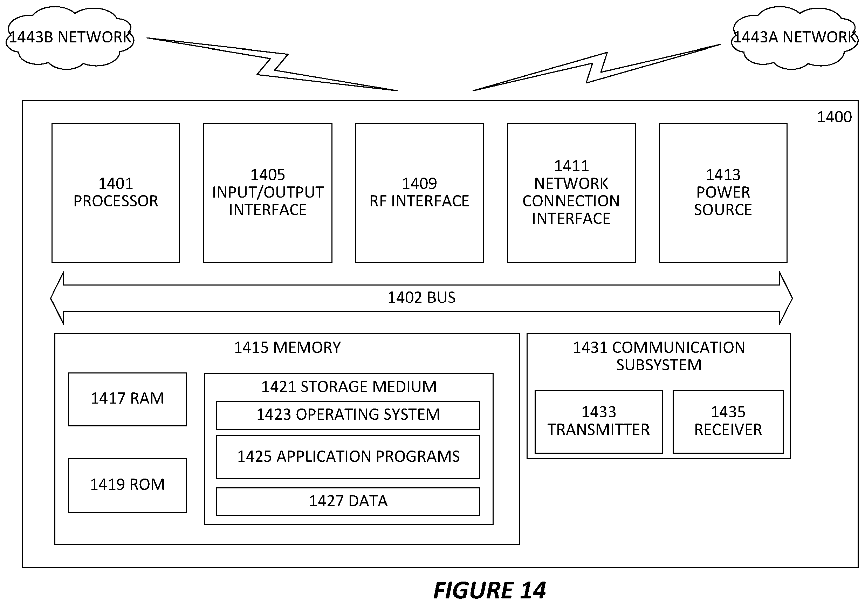

Figure 14 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 14200 may be any UE identified by the 3^{rd} Generation Partnership Project (3GPP), including a NB-loT UE, a machine type communication (MTC) UE, and/or an enhanced MTC (eMTC) UE. UE 1400, as illustrated in Figure 14, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE may be used interchangeable. Accordingly, although Figure 14 is a UE, the components discussed herein are equally applicable to a WD, and vice-versa.

In Figure 14, UE 1400 includes processing circuitry 1401 that is operatively coupled to input/output interface 1405, radio frequency (RF) interface 1409, network connection interface 1411, memory 1415 including random access memory (RAM) 1417, read-only memory (ROM) 1419, and storage medium 1421 or the like, communication subsystem 1431, power source 1433, and/or any other component, or any combination thereof. Storage medium 1421 includes operating system 1423, application program 1425, and data 1427. In other embodiments, storage medium 1421 may include other similar types of information. Certain UEs may utilize all of the components shown in Figure 14, or only a subset of the components. The level of integration between the components may vary from one UE to another UE. Further, certain UEs may contain multiple instances of a component, such as multiple processors, memories, transceivers, transmitters, receivers, etc.

In Figure 14, processing circuitry 1401 may be configured to process computer instructions and data. Processing circuitry 1401 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 1401 may include two central processing units (CPUs). Data may be information in a form suitable for use by a computer.

In the depicted embodiment, input/output interface 1405 may be configured to provide a communication interface to an input device, output device, or input and output device. UE 1400 may be configured to use an output device via input/output interface 1405. An output device may use the same type of interface port as an input device. For example, a USB port may be used to provide input to and output from UE 1400. The output device may be a speaker, a sound card, a video card, a display, a monitor, a printer, an actuator, an emitter, a smartcard, another output device, or any combination thereof. UE 1400 may be configured to use an input device via input/output interface 1405 to allow a user to capture information into UE 1400. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 14, RF interface 1409 may be configured to provide a communication interface to RF components such as a transmitter, a receiver, and an antenna. Network connection interface 1411 may be configured to provide a communication interface to network 1443a. Network 1443a may encompass wired and/or wireless networks such as a local-area network (LAN), a wide-area network (WAN), a computer network, a wireless network, a telecommunications network, another like network or any combination thereof. For example, network 1443a may comprise a Wi-Fi network. Network connection interface 1411 may be configured to include a receiver and a transmitter interface used to communicate with one or more other devices over a communication network according to one or more communication protocols, such as Ethernet, TCP/IP, SONET, ATM, or the like. Network connection interface 1411 may implement receiver and transmitter functionality appropriate to the communication network links (e.g., optical, electrical, and the like). The transmitter and receiver functions may share circuit components, software or firmware, or alternatively may be implemented separately.

RAM 1417 may be configured to interface via bus 1402 to processing circuitry 1401 to provide storage or caching of data or computer instructions during the execution of software programs such as the operating system, application programs, and device drivers. ROM 1419 may be configured to provide computer instructions or data to processing circuitry 1401. For example, ROM 1419 may be configured to store invariant low-level system code or data for basic system functions such as basic input and output (I/O), startup, or reception of keystrokes from a keyboard that are stored in a non-volatile memory. Storage medium 1421 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 1421 may be configured to include operating system 1423, application program 1425 such as a web browser application, a widget or gadget engine or another application, and data file 1427. Storage medium 1421 may store, for use by UE 1400, any of a variety of various operating systems or combinations of operating systems.

Storage medium 1421 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 1421 may allow UE 1400 to access computer-executable instructions, application programs or the like, stored on transitory or non-transitory memory media, to off-load data, or to upload data. An article of manufacture, such as one utilizing a communication system may be tangibly embodied in storage medium 1421, which may comprise a device readable medium.

In Figure 14, processing circuitry 1401 may be configured to communicate with network 1443b using communication subsystem 1431. Network 1443a and network 1443b may be the same network or networks or different network or networks. Communication subsystem 1431 may be configured to include one or more transceivers used to communicate with network 1443b. For example, communication subsystem 1431 may be configured to include one or more transceivers used to communicate with one or more remote transceivers of another device capable of wireless communication such as another WD, UE, or base station of a radio access network (RAN) according to one or more communication protocols, such as IEEE 802.14, CDMA, WCDMA, GSM, LTE, UTRAN, WiMax, or the like. Each transceiver may include transmitter 1433 and/or receiver 1435 to implement transmitter or receiver functionality, respectively, appropriate to the RAN links (e.g., frequency allocations and the like). Further, transmitter 1433 and receiver 1435 of each transceiver may share circuit components, software or firmware, or alternatively may be implemented separately.

In the illustrated embodiment, the communication functions of communication subsystem 1431 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 1431 may include cellular communication, Wi-Fi communication, Bluetooth communication, and GPS communication. Network 1443b may encompass wired and/or wireless networks such as a local-area network (LAN), a wide-area network (WAN), a computer network, a wireless network, a telecommunications network, another like network or any combination thereof. For example, network 1443b may be a cellular network, a Wi-Fi network, and/or a near-field network. Power source 1413 may be configured to provide alternating current (AC) or direct current (DC) power to components of UE 1400.

The features, benefits and/or functions described herein may be implemented in one of the components of UE 1400 or partitioned across multiple components of UE 1400. Further, the features, benefits, and/or functions described herein may be implemented in any combination of hardware, software or firmware. In one example, communication subsystem 1431 may be configured to include any of the components described herein. Further, processing circuitry 1401 may be configured to communicate with any of such components over bus 1402. In another example, any of such components may be represented by program instructions stored in memory that when executed by processing circuitry 1401 perform the corresponding functions described herein. In another example, the functionality of any of such components may be partitioned between processing circuitry 1401 and communication subsystem 1431. In another example, the non-computationally intensive functions of any of such components may be implemented in software or firmware and the computationally intensive functions may be implemented in hardware.

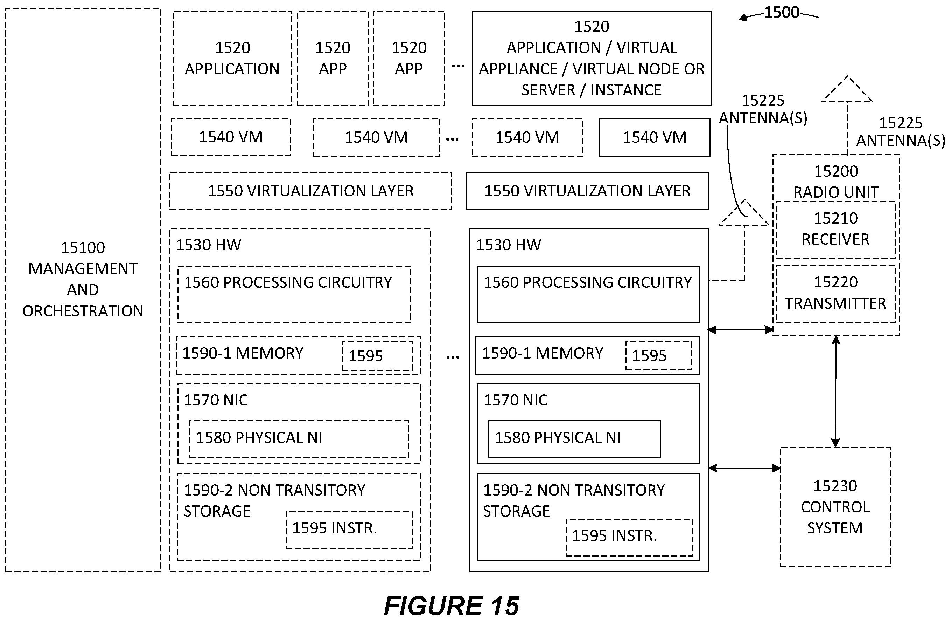

Figure 15 is a schematic block diagram illustrating a virtualization environment 1500 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 1500 hosted by one or more of hardware nodes 1530. Further, in embodiments in which the virtual node is not a radio access node or does not require radio connectivity (e.g., a core network node), then the network node may be entirely virtualized.

The functions may be implemented by one or more applications 1520 (which may alternatively be called software instances, virtual appliances, network functions, virtual nodes, virtual network functions, etc.) operative to implement some of the features, functions, and/or benefits of some of the embodiments disclosed herein. Applications 1520 are run in virtualization environment 1500 which provides hardware 1530 comprising processing circuitry 1560 and memory 1590. Memory 1590 contains instructions 1595 executable by processing circuitry 1560 whereby application 1520 is operative to provide one or more of the features, benefits, and/or functions disclosed herein.

Virtualization environment 1500, comprises general-purpose or special-purpose network hardware devices 1530 comprising a set of one or more processors or processing circuitry 1560, which may be commercial off-the-shelf (COTS) processors, dedicated Application Specific Integrated Circuits (ASICs), or any other type of processing circuitry including digital or analog hardware components or special purpose processors. Each hardware device may comprise memory 1590-1 which may be non-persistent memory for temporarily storing instructions 1595 or software executed by processing circuitry 1560. Each hardware device may comprise one or more network interface controllers (NICs) 1570, also known as network interface cards, which include physical network interface 1580. Each hardware device may also include non-transitory, persistent, machine-readable storage media 1590-2 having stored therein software 1595 and/or instructions executable by processing circuitry 1560. Software 1595 may include any type of software including software for instantiating one or more virtualization layers 1550 (also referred to as hypervisors), software to execute virtual machines 1540 as well as software allowing it to execute functions, features and/or benefits described in relation with some embodiments described herein.

Virtual machines 1540, comprise virtual processing, virtual memory, virtual networking or interface and virtual storage, and may be run by a corresponding virtualization layer 1550 or hypervisor. Different embodiments of the instance of virtual appliance 1520 may be implemented on one or more of virtual machines 1540, and the implementations may be made in different ways.

During operation, processing circuitry 1560 executes software 1595 to instantiate the hypervisor or virtualization layer 1550, which may sometimes be referred to as a virtual machine monitor (VMM). Virtualization layer 1550 may present a virtual operating platform that appears like networking hardware to virtual machine 1540.

As shown in Figure 15, hardware 1530 may be a standalone network node with generic or specific components. Hardware 1530 may comprise antenna 15225 and may implement some functions via virtualization. Alternatively, hardware 1530 may be part of a larger cluster of hardware (e.g. such as in a data center or customer premise equipment (CPE)) where many hardware nodes work together and are managed via management and orchestration (MANO) 15100, which, among others, oversees lifecycle management of applications 1520.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 1540 may be a software implementation of a physical machine that runs programs as if they were executing on a physical, non-virtualized machine. Each of virtual machines 1540, and that part of hardware 1530 that executes that virtual machine, be it hardware dedicated to that virtual machine and/or hardware shared by that virtual machine with others of the virtual machines 1540, forms a separate virtual network elements (VNE).

Still in the context of NFV, Virtual Network Function (VNF) is responsible for handling specific network functions that run in one or more virtual machines 1540 on top of hardware networking infrastructure 1530 and corresponds to application 1520 in Figure 15.

In some embodiments, one or more radio units 15200 that each include one or more transmitters 15220 and one or more receivers 15210 may be coupled to one or more antennas 15225. Radio units 15200 may communicate directly with hardware nodes 1530 via one or more appropriate network interfaces and may be used in combination with the virtual components to provide a virtual node with radio capabilities, such as a radio access node or a base station.

In some embodiments, some signalling can be effected with the use of control system 15230 which may alternatively be used for communication between the hardware nodes 1530 and radio units 15200.

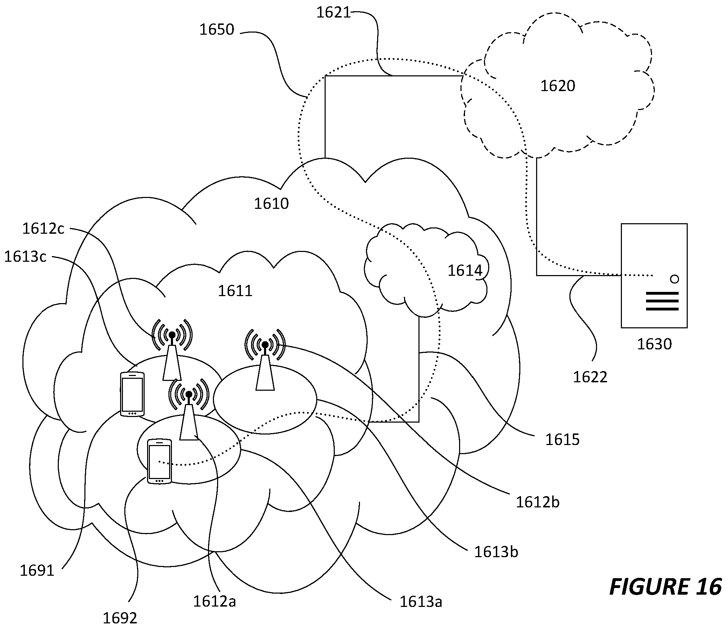

Figure 16 illustrates a telecommunication network connected via an intermediate network to a host computer in accordance with some embodiments. In particular, with reference to FIGURE 16, in accordance with an embodiment, a communication system includes telecommunication network 1610, such as a 3GPP-type cellular network, which comprises access network 1611, such as a radio access network, and core network 1614. Access network 1611 comprises a plurality of base stations 1612a, 1612b, 1612c, such as NBs, eNBs, gNBs or other types of wireless access points, each defining a corresponding coverage area 1613a, 1613b, 1613c. Each base station 1612a, 1612b, 1612c is connectable to core network 1614 over a wired or wireless connection 1615. A first UE 1691 located in coverage area 1613c is configured to wirelessly connect to, or be paged by, the corresponding base station 1612c. A second UE 1692 in coverage area 1613a is wirelessly connectable to the corresponding base station 1612a. While a plurality of UEs 1691, 1692 are illustrated in this example, the disclosed embodiments are equally applicable to a situation where a sole UE is in the coverage area or where a sole UE is connecting to the corresponding base station 1612.

Telecommunication network 1610 is itself connected to host computer 1630, which may be embodied in the hardware and/or software of a standalone server, a cloud-implemented server, a distributed server or as processing resources in a server farm. Host computer 1630 may be under the ownership or control of a service provider, or may be operated by the service provider or on behalf of the service provider. Connections 1621 and 1622 between telecommunication network 1610 and host computer 1630 may extend directly from core network 1614 to host computer 1630 or may go via an optional intermediate network 1620. Intermediate network 1620 may be one of, or a combination of more than one of, a public, private or hosted network; intermediate network 1620, if any, may be a backbone network or the Internet; in particular, intermediate network 1620 may comprise two or more sub-networks (not shown).

The communication system of Figure 16 as a whole enables connectivity between the connected UEs 1691, 1692 and host computer 1630. The connectivity may be described as an over-the-top (OTT) connection 1650. Host computer 1630 and the connected UEs 1691, 1692 are configured to communicate data and/or signaling via OTT connection 1650, using access network 1611, core network 1614, any intermediate network 1620 and possible further infrastructure (not shown) as intermediaries. OTT connection 1650 may be transparent in the sense that the participating communication devices through which OTT connection 1650 passes are unaware of routing of uplink and downlink communications. For example, base station 1612 may not or need not be informed about the past routing of an incoming downlink communication with data originating from host computer 1630 to be forwarded (e.g., handed over) to a connected UE 1691. Similarly, base station 1612 need not be aware of the future routing of an outgoing uplink communication originating from the UE 1691 towards the host computer 1630.

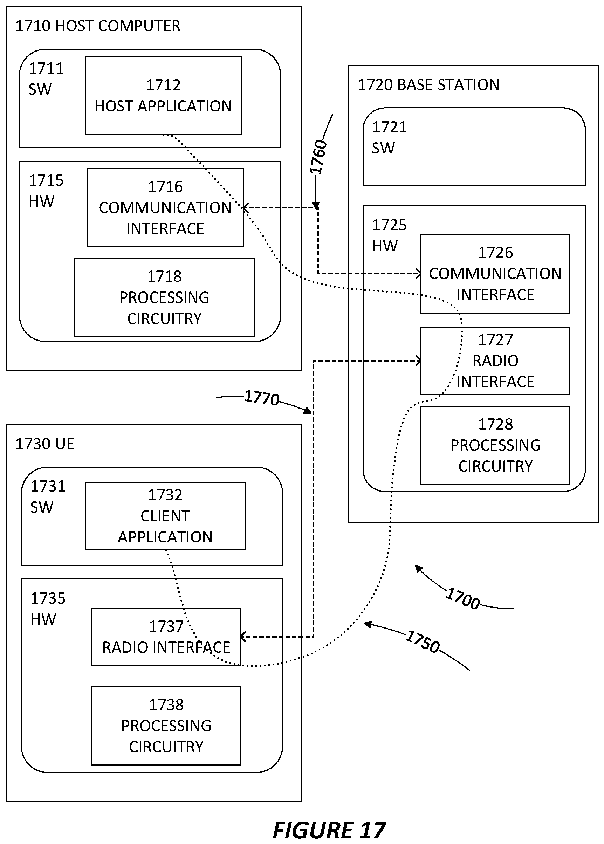

Example implementations, in accordance with an embodiment, of the UE, base station and host computer discussed in the preceding paragraphs will now be described with reference to Figure 17. Figure 17 illustrates host computer communicating via a base station with a user equipment over a partially wireless connection in accordance with some embodiments In communication system 1700, host computer 1710 comprises hardware 1715 including communication interface 1716 configured to set up and maintain a wired or wireless connection with an interface of a different communication device of communication system 1700. Host computer 1710 further comprises processing circuitry 1718, which may have storage and/or processing capabilities. In particular, processing circuitry 1718 may comprise one or more programmable processors, application-specific integrated circuits, field programmable gate arrays or combinations of these (not shown) adapted to execute instructions. Host computer 1710 further comprises software 1711, which is stored in or accessible by host computer 1710 and executable by processing circuitry 1718. Software 1711 includes host application 1712. Host application 1712 may be operable to provide a service to a remote user, such as UE 1730 connecting via OTT connection 1750 terminating at UE 1730 and host computer 1710. In providing the service to the remote user, host application 1712 may provide user data which is transmitted using OTT connection 1750.

Communication system 1700 further includes base station 1720 provided in a telecommunication system and comprising hardware 1725 enabling it to communicate with host computer 1710 and with UE 1730. Hardware 1725 may include communication interface 1726 for setting up and maintaining a wired or wireless connection with an interface of a different communication device of communication system 1700, as well as radio interface 1727 for setting up and maintaining at least wireless connection 1770 with UE 1730 located in a coverage area (not shown in Figure 17) served by base station 1720. Communication interface 1726 may be configured to facilitate connection 1760 to host computer 1710. Connection 1760 may be direct or it may pass through a core network (not shown in Figure 17) of the telecommunication system and/or through one or more intermediate networks outside the telecommunication system. In the embodiment shown, hardware 1725 of base station 1720 further includes processing circuitry 1728, which may comprise one or more programmable processors, application-specific integrated circuits, field programmable gate arrays or combinations of these (not shown) adapted to execute instructions. Base station 1720 further has software 1721 stored internally or accessible via an external connection.

Communication system 1700 further includes UE 1730 already referred to. Its hardware 1735 may include radio interface 1737 configured to set up and maintain wireless connection 1770 with a base station serving a coverage area in which UE 1730 is currently located. Hardware 1735 of UE 1730 further includes processing circuitry 1738, which may comprise one or more programmable processors, application-specific integrated circuits, field programmable gate arrays or combinations of these (not shown) adapted to execute instructions. UE 1730 further comprises software 1731, which is stored in or accessible by UE 1730 and executable by processing circuitry 1738. Software 1731 includes client application 1732. Client application 1732 may be operable to provide a service to a human or non-human user via UE 1730, with the support of host computer 1710. In host computer 1710, an executing host application 1712 may communicate with the executing client application 1732 via OTT connection 1750 terminating at UE 1730 and host computer 1710. In providing the service to the user, client application 1732 may receive request data from host application 1712 and provide user data in response to the request data. OTT connection 1750 may transfer both the request data and the user data. Client application 1732 may interact with the user to generate the user data that it provides.

It is noted that host computer 1710, base station 1720 and UE 1730 illustrated in Figure 17 may be similar or identical to host computer 1630, one of base stations 1612a, 1612b, 1612c and one of UEs 1691, 1692 of Figure 16, respectively. This is to say, the inner workings of these entities may be as shown in Figure 17 and independently, the surrounding network topology may be that of Figure 16.

In Figure 17, OTT connection 1750 has been drawn abstractly to illustrate the communication between host computer 1710 and UE 1730 via base station 1720, without explicit reference to any intermediary devices and the precise routing of messages via these devices. Network infrastructure may determine the routing, which it may be configured to hide from UE 1730 or from the service provider operating host computer 1710, or both. While OTT connection 1750 is active, the network infrastructure may further take decisions by which it dynamically changes the routing (e.g., on the basis of load balancing consideration or reconfiguration of the network).

Wireless connection 1770 between UE 1730 and base station 1720 is in accordance with the teachings of the embodiments described throughout this disclosure. One or more of the various embodiments improve the performance of OTT services provided to UE 1730 using OTT connection 1750, in which wireless connection 1770 forms the last segment.

A measurement procedure may be provided for the purpose of monitoring data rate, latency and other factors on which the one or more embodiments improve. There may further be an optional network functionality for reconfiguring OTT connection 1750 between host computer 1710 and UE 1730, in response to variations in the measurement results. The measurement procedure and/or the network functionality for reconfiguring OTT connection 1750 may be implemented in software 1711 and hardware 1715 of host computer 1710 or in software 1731 and hardware 1735 of UE 1730, or both. In embodiments, sensors (not shown) may be deployed in or in association with communication devices through which OTT connection 1750 passes; the sensors may participate in the measurement procedure by supplying values of the monitored quantities exemplified above, or supplying values of other physical quantities from which software 1711, 1731 may compute or estimate the monitored quantities. The reconfiguring of OTT connection 1750 may include message format, retransmission settings, preferred routing etc.; the reconfiguring need not affect base station 1720, and it may be unknown or imperceptible to base station 1720. Such procedures and functionalities may be known and practiced in the art. In certain embodiments, measurements may involve proprietary UE signaling facilitating host computer 1710's measurements of throughput, propagation times, latency and the like. The measurements may be implemented in that software 1711 and 1731 causes messages to be transmitted, in particular empty or 'dummy' messages, using OTT connection 1750 while it monitors propagation times, errors etc.

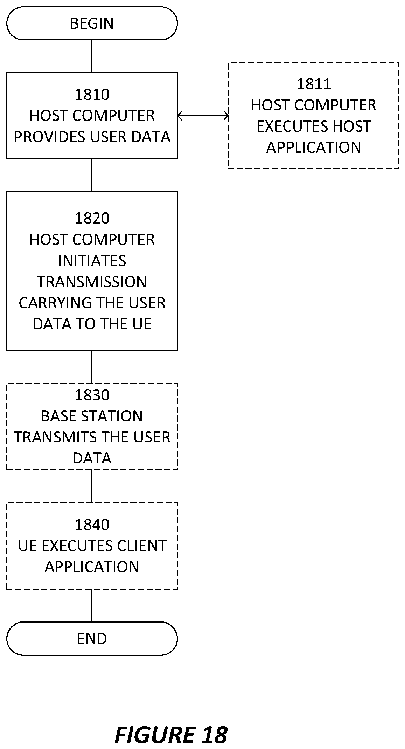

Figure 18 is a flowchart illustrating a method implemented in a communication system, in accordance with one embodiment. The communication system includes a host computer, a base station and a UE which may be those described with reference to Figures 16 and 17. For simplicity of the present disclosure, only drawing references to Figure 18 will be included in this section. In step 1810, the host computer provides user data. In substep 1811 (which may be optional) of step 1810, the host computer provides the user data by executing a host application. In step 1820, the host computer initiates a transmission carrying the user data to the UE. In step 1830 (which may be optional), the base station transmits to the UE the user data which was carried in the transmission that the host computer initiated, in accordance with the teachings of the embodiments described throughout this disclosure. In step 1840 (which may also be optional), the UE executes a client application associated with the host application executed by the host computer.

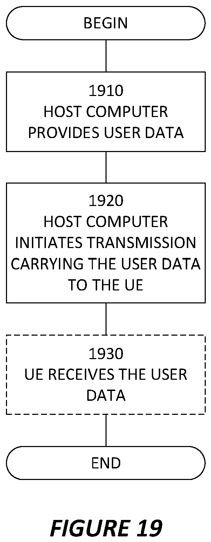

Figure 19 is a flowchart illustrating a method implemented in a communication system, in accordance with one embodiment. The communication system includes a host computer, a base station and a UE which may be those described with reference to Figures 16 and 17. For simplicity of the present disclosure, only drawing references to Figure 19 will be included in this section. In step 1910 of the method, the host computer provides user data. In an optional substep (not shown) the host computer provides the user data by executing a host application. In step 1920, the host computer initiates a transmission carrying the user data to the UE. The transmission may pass via the base station, in accordance with the teachings of the embodiments described throughout this disclosure. In step 1930 (which may be optional), the UE receives the user data carried in the transmission.

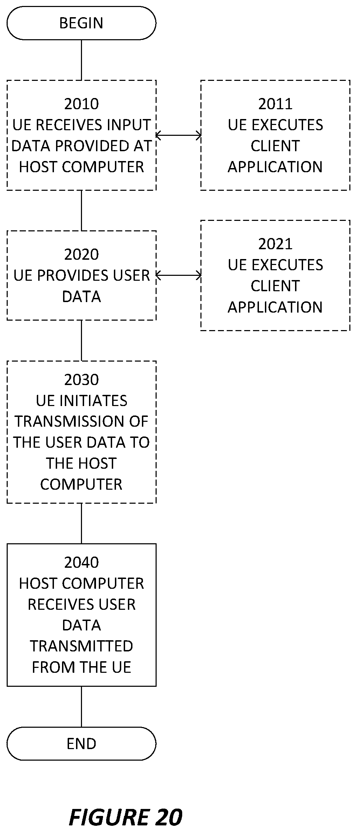

Figure 20 is a flowchart illustrating a method implemented in a communication system, in accordance with one embodiment. The communication system includes a host computer, a base station and a UE which may be those described with reference to Figures 16 and 17. For simplicity of the present disclosure, only drawing references to Figure 20 will be included in this section. In step 2010 (which may be optional), the UE receives input data provided by the host computer. Additionally or alternatively, in step 2020, the UE provides user data. In substep 2021 (which may be optional) of step 2020, the UE provides the user data by executing a client application. In substep 2011 (which may be optional) of step 2010, the UE executes a client application which provides the user data in reaction to the received input data provided by the host computer. In providing the user data, the executed client application may further consider user input received from the user. Regardless of the specific manner in which the user data was provided, the UE initiates, in substep 2030 (which may be optional), transmission of the user data to the host computer. In step 2040 of the method, the host computer receives the user data transmitted from the UE, in accordance with the teachings of the embodiments described throughout this disclosure.

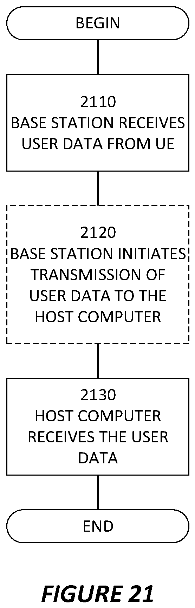

Figure 21 is a flowchart illustrating a method implemented in a communication system, in accordance with one embodiment. The communication system includes a host computer, a base station and a UE which may be those described with reference to Figures 16 and 17. For simplicity of the present disclosure, only drawing references to Figure 21 will be included in this section. In step 2110 (which may be optional), in accordance with the teachings of the embodiments described throughout this disclosure, the base station receives user data from the UE. In step 2120 (which may be optional), the base station initiates transmission of the received user data to the host computer. In step 2130 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

In view of the above, then, embodiments herein generally include a communication system including a host computer. The host computer may comprise processing circuitry configured to provide user data. The host computer may also comprise a communication interface configured to forward the user data to a cellular network for transmission to a user equipment (UE). The cellular network may comprise a base station having a radio interface and processing circuitry, the base station's processing circuitry configured to perform any of the steps of any of the embodiments described above for a base station.

In some embodiments, the communication system further includes the base station.

In some embodiments, the communication system further includes the UE, wherein the UE is configured to communicate with the base station.

In some embodiments, the processing circuitry of the host computer is configured to execute a host application, thereby providing the user data. In this case, the UE comprises processing circuitry configured to execute a client application associated with the host application.

Embodiments herein also include a method implemented in a communication system including a host computer, a base station and a user equipment (UE). The method comprises, at the host computer, providing user data. The method may also comprise, at the host computer, initiating a transmission carrying the user data to the UE via a cellular network comprising the base station. The base station performs any of the steps of any of the embodiments described above for a base station.

In some embodiments, the method further comprising, at the base station, transmitting the user data.

In some embodiments, the user data is provided at the host computer by executing a host application. In this case, the method further comprises, at the UE, executing a client application associated with the host application.

Embodiments herein also include a user equipment (UE) configured to communicate with a base station. The UE comprises a radio interface and processing circuitry configured to perform any of the embodiments above described for a UE.

Embodiments herein further include a communication system including a host computer. The host computer comprises processing circuitry configured to provide user data, and a communication interface configured to forward user data to a cellular network for transmission to a user equipment (UE). The UE comprises a radio interface and processing circuitry. The UE's components are configured to perform any of the steps of any of the embodiments described above for a UE.

In some embodiments, the cellular network further includes a base station configured to communicate with the UE.

In some embodiments, the processing circuitry of the host computer is configured to execute a host application, thereby providing the user data. The UE's processing circuitry is configured to execute a client application associated with the host application.

Embodiments also include a method implemented in a communication system including a host computer, a base station and a user equipment (UE). The method comprises, at the host computer, providing user data and initiating a transmission carrying the user data to the UE via a cellular network comprising the base station. The UE performs any of the steps of any of the embodiments described above for a UE.

In some embodiments, the method further comprises, at the UE, receiving the user data from the base station.

Embodiments herein further include a communication system including a host computer. The host computer comprises a communication interface configured to receive user data originating from a transmission from a user equipment (UE) to a base station. The UE comprises a radio interface and processing circuitry. The UE's processing circuitry is configured to perform any of the steps of any of the embodiments described above for a UE.

In some embodiments the communication system further includes the UE.

In some embodiments, the communication system further including the base station. In this case, the base station comprises a radio interface configured to communicate with the UE and a communication interface configured to forward to the host computer the user data carried by a transmission from the UE to the base station.

In some embodiments, the processing circuitry of the host computer is configured to execute a host application. And the UE's processing circuitry is configured to execute a client application associated with the host application, thereby providing the user data.

In some embodiments, the processing circuitry of the host computer is configured to execute a host application, thereby providing request data. And the UE's processing circuitry is configured to execute a client application associated with the host application, thereby providing the user data in response to the request data.

Embodiments herein also include a method implemented in a communication system including a host computer, a base station and a user equipment (UE). The method comprises, at the host computer, receiving user data transmitted to the base station from the UE. The UE performs any of the steps of any of the embodiments described above for the UE.

In some embodiments, the method further comprises, at the UE, providing the user data to the base station.

In some embodiments, the method also comprises, at the UE, executing a client application, thereby providing the user data to be transmitted. The method may further comprise, at the host computer, executing a host application associated with the client application.

In some embodiments, the method further comprises, at the UE, executing a client application, and, at the UE, receiving input data to the client application. The input data is provided at the host computer by executing a host application associated with the client application. The user data to be transmitted is provided by the client application in response to the input data.

Embodiments also include a communication system including a host computer. The host computer comprises a communication interface configured to receive user data originating from a transmission from a user equipment (UE) to a base station. The base station comprises a radio interface and processing circuitry. The base station's processing circuitry is configured to perform any of the steps of any of the embodiments described above for a base station.

In some embodiments, the communication system further includes the base station.

In some embodiments, the communication system further includes the UE. The UE is configured to communicate with the base station.

In some embodiments, the processing circuitry of the host computer is configured to execute a host application. And the UE is configured to execute a client application associated with the host application, thereby providing the user data to be received by the host computer.

Embodiments moreover include a method implemented in a communication system including a host computer, a base station and a user equipment (UE). The method comprises, at the host computer, receiving, from the base station, user data originating from a transmission which the base station has received from the UE. The UE performs any of the steps of any of the embodiments described above for a UE.

In some embodiments, the method further comprises, at the base station, receiving the user data from the UE.

In some embodiments, the method further comprises, at the base station, initiating a transmission of the received user data to the host computer.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the description.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

The term "A and/or B" as used herein covers embodiments having A alone, B alone, or both A and B together. The term "A and/or B" may therefore equivalently mean "at least one of any one or more of A and B".

Some of the embodiments contemplated herein are described more fully with reference to the accompanying drawings. Other embodiments, however, are contained within the scope of the subject matter disclosed herein. The disclosed subject matter should not be construed as limited to only the embodiments set forth herein; rather, these embodiments are provided by way of example to convey the scope of the subject matter to those skilled in the art.

### ABBREVIATIONS

At least some of the following abbreviations may be used in this disclosure. If there is an inconsistency between abbreviations, preference should be given to how it is used above. If listed multiple times below, the first listing should be preferred over any subsequent listing(s).
- 3GPP: Third Generation Partnership Project
- AMF: Access Management Function
- AS: Access stratum
- D2D: Device-to-device
- DI: Downlink
- DRB: Data Radio Bearer
- IP: Internet Protocol
- ITS: Intelligent Transport Systems
- LCG: Logical Channel Group
- LCID: Logical Channel Identity
- LCP: Logical Channel Prioritization
- MAC: Medium Access Control
- MAC CE: MAC Control Element
- MAC CE: Medium Access Control - Control Element
- MAC: Medium Access Control
- NW: Network
- PDU: Packet Data Unit
- PDU: Protocol data unit
- PPPP: ProSe Per Packet Priority
- PPPR: ProSe Per Packet Reliability
- PRB: Physical Resource Block
- ProSe: Proximity Services
- PUCCH: Physical Uplink Control Channel
- PUSCH: Physical Uplink Shared Channel
- QoS: Quality of service
- RRC: Radio Resource Control
- RSU: Radio Side Unit
- SCI: Sidelink Control Information
- SDU: Service Data Unit
- SL: Sidelink
- SMF: Session Management Function
- TB: Transport Block
- UE: User Equipment
- UL: Uplink
- V2X: Vehicle-to-Everything
- 1x RTT: CDMA2000 1x Radio Transmission Technology
- 3GPP: 3rd Generation Partnership Project
- 5G: 5th Generation
- ABS: Almost Blank Subframe
- ARQ: Automatic Repeat Request
- AWGN: Additive White Gaussian Noise
- BCCH: Broadcast Control Channel
- BCH: Broadcast Channel
- CA: Carrier Aggregation
- CC: Carrier Component
- CCCH SDU: Common Control Channel SDU
- CDMA: Code Division Multiplexing Access
- CGI: Cell Global Identifier
- CIR: Channel Impulse Response
- CP: Cyclic Prefix
- CPICH: Common Pilot Channel
- CPICH Ec/No: CPICH Received energy per chip divided by the power density in the band
- CQI: Channel Quality information
- C-RNTI: Cell RNTI
- CSI: Channel State Information
- DCCH: Dedicated Control Channel
- DL: Downlink
- DM: Demodulation
- DMRS: Demodulation Reference Signal
- DRX: Discontinuous Reception
- DTX: Discontinuous Transmission
- DTCH: Dedicated Traffic Channel
- OUT: Device Under Test
- E-CID: Enhanced Cell-ID (positioning method)
- E-SMLC: Evolved-Serving Mobile Location Centre
- ECGI: Evolved CGI
- eNB: E-UTRAN NodeB
- ePDCCH: enhanced Physical Downlink Control Channel
- E-SMLC: evolved Serving Mobile Location Center
- E-UTRA: Evolved UTRA
- E-UTRAN: Evolved UTRAN
- FDD: Frequency Division Duplex
- FFS: For Further Study
- GERAN: GSM EDGE Radio Access Network
- gNB: Base station in NR
- GNSS: Global Navigation Satellite System
- GSM: Global System for Mobile communication
- HARQ: Hybrid Automatic Repeat Request
- HO: Handover
- HSPA: High Speed Packet Access
- HRPD: High Rate Packet Data
- LOS: Line of Sight
- LPP: LTE Positioning Protocol
- LTE: Long-Term Evolution
- MAC: Medium Access Control
- MBMS: Multimedia Broadcast Multicast Services
- MBSFN: Multimedia Broadcast multicast service Single Frequency Network
- MBSFN ABS: MBSFN Almost Blank Subframe
- MDT: Minimization of Drive Tests
- MIB: Master Information Block
- MME: Mobility Management Entity
- MSC: Mobile Switching Center
- NPDCCH: Narrowband Physical Downlink Control Channel
- NR: New Radio
- OCNG: OFDMA Channel Noise Generator
- OFDM: Orthogonal Frequency Division Multiplexing
- OFDMA: Orthogonal Frequency Division Multiple Access
- OSS: Operations Support System
- OTDOA: Observed Time Difference of Arrival
- O&M: Operation and Maintenance
- PBCH: Physical Broadcast Channel
- P-CCPCH: Primary Common Control Physical Channel
- PCell: Primary Cell
- PCFICH: Physical Control Format Indicator Channel
- PDCCH: Physical Downlink Control Channel
- PDP: Profile Delay Profile
- PDSCH: Physical Downlink Shared Channel
- PGW: Packet Gateway
- PHICH: Physical Hybrid-ARQ Indicator Channel
- PLMN: Public Land Mobile Network
- PMI: Precoder Matrix Indicator
- PRACH: Physical Random Access Channel
- PRS: Positioning Reference Signal
- PSS: Primary Synchronization Signal
- PUCCH: Physical Uplink Control Channel
- PUSCH: Physical Uplink Shared Channel
- RACH: Random Access Channel
- QAM: Quadrature Amplitude Modulation
- RAN: Radio Access Network
- RAT: Radio Access Technology
- RLM: Radio Link Management
- RNC: Radio Network Controller
- RNTI: Radio Network Temporary Identifier
- RRC: Radio Resource Control
- RRM: Radio Resource Management
- RS: Reference Signal
- RSCP: Received Signal Code Power
- RSRP: Reference Symbol Received Power OR Reference Signal Received Power
- RSRQ: Reference Signal Received Quality OR Reference Symbol Received Quality
- RSSI: Received Signal Strength Indicator
- RSTD: Reference Signal Time Difference
- SCH: Synchronization Channel
- SCell: Secondary Cell
- SDU: Service Data Unit
- SFN: System Frame Number
- SGW: Serving Gateway
- SI: System Information
- SIB: System Information Block
- SNR: Signal to Noise Ratio
- SON: Self Optimized Network
- SS: Synchronization Signal
- SSS: Secondary Synchronization Signal
- TDD: Time Division Duplex
- TDOA: Time Difference of Arrival
- TOA: Time of Arrival
- TSS: Tertiary Synchronization Signal
- TTI: Transmission Time Interval
- UE: User Equipment
- UL: Uplink
- UMTS: Universal Mobile Telecommunication System
- USIM: Universal Subscriber Identity Module
- UTDOA: Uplink Time Difference of Arrival
- UTRA: Universal Terrestrial Radio Access
- UTRAN: Universal Terrestrial Radio Access Network
- WCDMA: Wide CDMA
- WLAN: Wide Local Area Network

## Claims

1. A method performed by a wireless device (10), the method comprising:
receiving (400), from a source radio network node (14S) of a handover, a handover command message (28) indicating a sidelink configuration (26) that is usable after the handover and is supported by a target radio network node (14T) of the handover;
wherein the sidelink configuration (26) is a configuration of a sidelink (16) for the wireless device (10) and configures one or both of a mapping of sidelink Quality of Service, QoS, flows to sidelink radio bearers, and a configuration of one or more sidelink radio bearers.

2. The method of claim 1, wherein the sidelink configuration (26) further configures at least one of:
QoS parameters associated with each sidelink QoS flow;
a configured grant usable by the wireless device (10) on the sidelink (16); and
a resource pool that includes resources for transmission or reception over the sidelink (16).

3. The method of any of claims 1-2, wherein the sidelink configuration (26) further comprises a configured grant usable by the wireless device (10) over the sidelink (16).

4. The method of any of claims 1-3, further comprising using (410, 420) the indicated sidelink configuration (26) during and/or after the handover.

5. A method performed by a radio network node that is a source radio network node (14S) of a handover of a wireless device (10), the method comprising:
transmitting (540), from the source radio network node (14S) to the wireless device (10), a handover command message (28) indicating a sidelink configuration (26) that is usable after the handover and is supported by a target radio network node (14T) of the handover;
wherein the sidelink configuration (26) is a configuration of a sidelink (16) for the wireless device (10) and configures one or both of a mapping of sidelink Quality of Service, QoS, flows to sidelink radio bearers, and a configuration of one or more sidelink radio bearers.

6. The method of claim 5, wherein the sidelink configuration (26) further configures at least one of:
QoS parameters associated with each sidelink QoS flow;
a configured grant usable by the wireless device (10) on the sidelink (16); and
a resource pool that includes resources for transmission or reception over the sidelink (16).

7. The method of any of claims 5-6, wherein the sidelink configuration (26) further comprises a configured grant usable by the wireless device (10) over the sidelink (16).

8. A wireless device (10) configured to:
receive, from a source radio network node (14S) of a handover, a handover command message (28) indicating a sidelink configuration (26) that is usable after the handover and is supported by a target radio network node (14T) of the handover;
wherein the sidelink configuration (26) is a configuration of a sidelink (16) for the wireless device (10) and configures one or both of a mapping of sidelink Quality of Service, QoS, flows to sidelink radio bearers, and a configuration of one or more sidelink radio bearers.

9. The wireless device (10) of claim 8, configured to perform the method of any of claims 2-4.

10. A radio network node configured to operate as a source radio network node (14S) of a handover of a wireless device (10), the radio network node configured to:
transmit, from the source radio network node (14S) to the wireless device (10), a handover command message (28) indicating a sidelink configuration (26) that is usable during and/or after the handover and is supported by a target radio network node (14T) of the handover;
wherein the sidelink configuration (26) is a configuration of a sidelink (16) for the wireless device (10) and configures one or both of a mapping of sidelink Quality of Service, QoS, flows to sidelink radio bearers, and a configuration of one or more sidelink radio bearers.

11. The radio network node of claim 10, configured to perform the method of any of claims 6-7.

12. A computer program comprising instructions which, when executed by at least one processor of a wireless device (10), causes the wireless device (10) to carry out the method of any of claims 1-4.

13. A computer program comprising instructions which, when executed by at least one processor of a radio network node, causes the radio network node to carry out the method of any of claims 5-7.

14. A computer readable storage medium comprising, or a carrier signal carrying, the computer program of either one of claims 12 and 13, wherein the carrier signal is one of an electronic signal, an optical signal, or a radio signal.

## Patentansprüche

1. Verfahren, das von einer drahtlosen Vorrichtung (10) durchgeführt wird, wobei das Verfahren Folgendes umfasst:
Empfangen (400) einer Übergabebefehlsnachricht (28), die eine Sidelink-Konfiguration (26) angibt, die nach einer Übergabe verwendet werden kann und von einem Ziel-Funknetzwerkknoten (14T) der Übergabe unterstützt wird, von einem Quell-Funknetzwerkknoten (14S) der Übergabe;
wobei die Sidelink-Konfiguration (26) eine Konfiguration eines Sidelinks (16) für die drahtlose Vorrichtung (10) ist und eine oder beide von einer Zuordnung von Sidelink-Dienstqualitätsflüssen, Sidelink-QoS-Flüssen, zu Sidelink-Funkträgern und einer Konfiguration eines oder mehrerer Sidelink-Funkträger konfiguriert.

2. Verfahren nach Anspruch 1, wobei die Sidelink-Konfiguration (26) ferner mindestens eines von Folgenden konfiguriert:
QoS-Parameter, die mit jedem Sidelink-QoS-Fluss assoziiert sind;
eine konfigurierte Freigabe, die von der drahtlosen Vorrichtung (10) auf dem Sidelink (16) verwendet werden kann;
einen Ressourcenpool, der Ressourcen zum Senden oder Empfangen über den Sidelink (16) umfasst.

3. Verfahren nach einem der Ansprüche 1-2, wobei die Sidelink-Konfiguration (26) ferner eine konfigurierte Freigabe umfasst, die von der drahtlosen Vorrichtung (10) über den Sidelink (16) verwendet werden kann.

4. Verfahren nach einem der Ansprüche 1-3, ferner umfassend Verwenden (410, 420) der angegebenen Sidelink-Konfiguration (26) während und/oder nach der Übergabe.

5. Verfahren, das von einem Funknetzwerkknoten durchgeführt wird, der ein Quell-Funknetzwerkknoten (14S) einer Übergabe einer drahtlosen Vorrichtung (10) ist, wobei das Verfahren Folgendes umfasst:
Senden (540) einer Übergabebefehlsnachricht (28), die eine Sidelink-Konfiguration (26) angibt, die nach einer Übergabe verwendet werden kann und von einem Ziel-Funknetzwerkknoten (14T) der Übergabe unterstützt wird, von dem Quell-Funknetzwerkknoten (14S) der Übergabe an die drahtlose Vorrichtung (10);
wobei die Sidelink-Konfiguration (26) eine Konfiguration eines Sidelinks (16) für die drahtlose Vorrichtung (10) ist und eine oder beide von einer Zuordnung von Sidelink-Dienstqualitätsflüssen, Sidelink-QoS-Flüssen, zu Sidelink-Funkträgern und einer Konfiguration eines oder mehrerer Sidelink-Funkträger konfiguriert.

6. Verfahren nach Anspruch 5, wobei die Sidelink-Konfiguration (26) ferner mindestens eines von Folgenden konfiguriert:
QoS-Parameter, die mit jedem Sidelink-QoS-Fluss assoziiert sind;
eine konfigurierte Freigabe, die von der drahtlosen Vorrichtung (10) auf dem Sidelink (16) verwendet werden kann;
einen Ressourcenpool, der Ressourcen zum Senden oder Empfangen über den Sidelink (16) umfasst.

7. Verfahren nach einem der Ansprüche 5-6, wobei die Sidelink-Konfiguration (26) ferner eine konfigurierte Freigabe umfasst, die von der drahtlosen Vorrichtung (10) über den Sidelink (16) verwendet werden kann.

8. Drahtlose Vorrichtung (10), die zu Folgendem konfiguriert ist:
Empfangen einer Übergabebefehlsnachricht (28), die eine Sidelink-Konfiguration (26) angibt, die nach einer Übergabe verwendet werden kann und von einem Ziel-Funknetzwerkknoten (14T) der Übergabe unterstützt wird, von einem Quell-Funknetzwerkknoten (14S) der Übergabe;
wobei die Sidelink-Konfiguration (26) eine Konfiguration eines Sidelinks (16) für die drahtlose Vorrichtung (10) ist und eine oder beide von einer Zuordnung von Sidelink-Dienstqualitätsflüssen, Sidelink-QoS-Flüssen, zu Sidelink-Funkträgern und einer Konfiguration eines oder mehrerer Sidelink-Funkträger konfiguriert.

9. Drahtlose Vorrichtung (10) nach Anspruch 8, die zum Durchführen des Verfahrens nach einem der Ansprüche 2-4 konfiguriert ist.

10. Funknetzwerkknoten, der dazu konfiguriert ist, als Quell-Funknetzwerkknoten (14S) einer Übergabe einer drahtlosen Vorrichtung (10) zu fungieren, wobei der Funknetzwerkknoten zu Folgendem konfiguriert ist:
Senden einer Übergabebefehlsnachricht (28), die eine Sidelink-Konfiguration (26) angibt, die während und/oder nach einer Übergabe verwendet werden kann und von einem Ziel-Funknetzwerkknoten (14T) der Übergabe unterstützt wird, von dem Quell-Funknetzwerkknoten (14S) der Übergabe an die drahtlose Vorrichtung (10);
wobei die Sidelink-Konfiguration (26) eine Konfiguration eines Sidelinks (16) für die drahtlose Vorrichtung (10) ist und eine oder beide von einer Zuordnung von Sidelink-Dienstqualitätsflüssen, Sidelink-QoS-Flüssen, zu Sidelink-Funkträgern und einer Konfiguration eines oder mehrerer Sidelink-Funkträger konfiguriert.

11. Funknetzwerkknoten nach Anspruch 10, der zum Durchführen des Verfahrens nach einem der Ansprüche 6-7 konfiguriert ist.

12. Computerprogramm, umfassend Anweisungen, die bei Ausführung durch mindestens einen Prozessor einer drahtlosen Vorrichtung (10) die drahtlose Vorrichtung (10) zum Durchführen des Verfahrens nach einem der Ansprüche 1-4 veranlassen.

13. Computerprogramm, umfassend Anweisungen, die bei Ausführung durch mindestens einen Prozessor eines Funknetzwerkknotens den Funknetzwerkknoten zum Durchführen des Verfahrens nach einem der Ansprüche 5-7 veranlassen.

14. Computerlesbares Speichermedium, das das Computerprogramm nach einem der Ansprüche 12 und 13 umfasst, oder Datenträgersignal. das dieses überträgt, wobei das Datenträgersignal eines von einem elektronischen Signal, einem optischen Signal oder einem Funksignal ist.

## Revendications

1. Procédé réalisé par un dispositif sans fil (10), le procédé comprenant :
la réception (400), depuis un nœud de réseau radio source (14S) d'un transfert intercellulaire, d'un message de commande de transfert intercellulaire (28) indiquant une configuration de liaison latérale (26) qui est utilisable après le transfert intercellulaire et est prise en charge par un nœud de réseau radio cible (14T) du transfert intercellulaire ;
dans lequel la configuration de liaison latérale (26) est une configuration d'une liaison latérale (16) pour le dispositif sans fil (10) et configure l'un ou les deux d'un mappage de flux de qualité de service, QoS, de liaison latérale à des supports radio de liaison latérale et d'une configuration d'un ou plusieurs supports radio de liaison latérale.

2. Procédé selon la revendication 1, dans lequel la configuration de liaison latérale (26) configure en outre au moins l'un parmi :
des paramètres QoS associés à chaque flux QoS de liaison latérale ;
un octroi configuré utilisable par le dispositif sans fil (10) sur la liaison latérale (16) ; et
un groupe de ressources qui inclut des ressources pour une transmission ou une réception sur la liaison latérale (16).

3. Procédé selon l'une quelconque des revendications 1 et 2, dans lequel la configuration de liaison latérale (26) comprend en outre un octroi configuré utilisable par le dispositif sans fil (10) sur la liaison latérale (16).

4. Procédé selon l'une quelconque des revendications 1 à 3, comprenant en outre l'utilisation (410, 420) de la configuration de liaison latérale (26) indiquée pendant et/ou après le transfert intercellulaire.

5. Procédé réalisé par un nœud de réseau radio qui est un nœud de réseau radio source (14S) d'un transfert intercellulaire d'un dispositif sans fil (10), le procédé comprenant :
la transmission (540), depuis le nœud de réseau radio source (14S) au dispositif sans fil (10), d'un message de commande de transfert intercellulaire (28) indiquant une configuration de liaison latérale (26) qui est utilisable après le transfert intercellulaire et est prise en charge par un nœud de réseau radio cible (14T) du transfert intercellulaire ;
dans lequel la configuration de liaison latérale (26) est une configuration d'une liaison latérale (16) pour le dispositif sans fil (10) et configure l'un ou les deux d'un mappage de flux de qualité de service, QoS, de liaison latérale à des supports radio de liaison latérale et d'une configuration d'un ou plusieurs supports radio de liaison latérale.

6. Procédé selon la revendication 5, dans lequel la configuration de liaison latérale (26) configure en outre au moins l'un parmi :
des paramètres QoS associés à chaque flux QoS de liaison latérale ;
un octroi configuré utilisable par le dispositif sans fil (10) sur la liaison latérale (16) ; et
un groupe de ressources qui inclut des ressources pour une transmission ou une réception sur la liaison latérale (16).

7. Procédé selon l'une quelconque des revendications 5 et 6, dans lequel la configuration de liaison latérale (26) comprend en outre un octroi configuré utilisable par le dispositif sans fil (10) sur la liaison latérale (16).

8. Dispositif sans fil (10) configuré pour :
recevoir, depuis un nœud de réseau radio source (14S) d'un transfert intercellulaire, un message de commande de transfert intercellulaire (28) indiquant une configuration de liaison latérale (26) qui est utilisable après le transfert intercellulaire et est prise en charge par un nœud de réseau radio cible (14T) du transfert intercellulaire ;
dans lequel la configuration de liaison latérale (26) est une configuration d'une liaison latérale (16) pour le dispositif sans fil (10) et configure l'un ou les deux d'un mappage de flux de qualité de service, QoS, de liaison latérale à des supports radio de liaison latérale et d'une configuration d'un ou plusieurs supports radio de liaison latérale.

9. Dispositif sans fil (10) selon la revendication 8, configuré pour réaliser le procédé selon l'une quelconque des revendications 2 à 4.

10. Nœud de réseau radio configuré pour fonctionner en tant que nœud de réseau radio source (14S) d'un transfert intercellulaire d'un dispositif sans fil (10), le nœud de réseau radio étant configurée pour :
transmettre, depuis le nœud de réseau radio source (14S) au dispositif sans fil (10), un message de commande de transfert intercellulaire (28) indiquant une configuration de liaison latérale (26) qui est utilisable pendant et/ou après le transfert intercellulaire et est prise en charge par un nœud de réseau radio cible (14T) du transfert intercellulaire ;
dans lequel la configuration de liaison latérale (26) est une configuration d'une liaison latérale (16) pour le dispositif sans fil (10) et configure l'un ou les deux d'un mappage de flux de qualité de service, QoS, de liaison latérale à des supports radio de liaison latérale et d'une configuration d'un ou plusieurs supports radio de liaison latérale.

11. Nœud de réseau radio selon la revendication 10, configuré pour réaliser le procédé selon l'une quelconque des revendications 6 et 7.

12. Programme informatique comprenant des instructions qui, lorsqu'elles sont exécutées par au moins un processeur d'un dispositif sans fil (10), amènent le dispositif sans fil (10) à réaliser le procédé selon l'une quelconque des revendications 1 à 4.

13. Programme informatique comprenant des instructions qui, lorsqu'elles sont exécutées par au moins un processeur d'un nœud de réseau radio, amènent le nœud de réseau radio à réaliser le procédé selon l'une quelconque des revendications 5 à 7.

14. Support de stockage lisible par ordinateur comprenant, ou signal porteur portant, le programme informatique selon l'une des revendications 12 et 13, dans lequel le signal porteur est l'un d'un signal électronique, d'un signal optique ou d'un signal radio.
